(19) Europäisches Patentamt
European Patent Office
Office européen des brevets

(11) EP 2 160 232 B1

(12) EUROPÄISCHE PATENTSCHRIFT

(45) Veröffentlichungstag und Bekanntmachung des Hinweises auf die Patenterteilung:
01.10.2014 Patentblatt 2014/40

(51) Int Cl.:
B82Y 30/00 (2011.01)   C01B 3/00 (2006.01)
F17C 5/06 (2006.01)   F17C 7/00 (2006.01)
B01D 53/04 (2006.01)   F17C 11/00 (2006.01)

(21) Anmeldenummer: 08749130.4

(22) Anmeldetag: 25.04.2008

(86) Internationale Anmeldenummer:
PCT/EP2008/003350

(87) Internationale Veröffentlichungsnummer:
WO 2009/000357 (31.12.2008 Gazette 2009/01)

(54) **SPEICHERBEHÄLTER FÜR GASFÖRMIGE KRAFSTOFFE UND DESSEN ANWENDUNG**

STORAGE TANK FOR GASEOUS FUELS, AND USE THEREOF

CONTENANT DE STOCKAGE POUR CARBURANTS GAZEUX ET UTILISATION DE CELUI-CI

(84) Benannte Vertragsstaaten:
AT BE BG CH CY CZ DE DK EE ES FI FR GB GR HR HU IE IS IT LI LT LU LV MC MT NL NO PL PT RO SE SI SK TR
Benannte Erstreckungsstaaten:
AL BA MK RS

(30) Priorität: 27.06.2007  DE 102007030140
16.07.2007  DE 102007033368

(43) Veröffentlichungstag der Anmeldung:
10.03.2010 Patentblatt 2010/10

(60) Teilanmeldung:
11002609.3 / 2 335 801

(73) Patentinhaber: Blücher GmbH
40699 Erkrath (DE)

(72) Erfinder:
• HEINRICH, Peter
47447 Moers (DE)
• KÄMPER, Stefan
40878 Ratingen (DE)
• MICHL, Florian
81371 München (DE)
• SCHÜTZ, Walter
95455 Weidenberg (DE)
• MICHELSEN, Julian
95447 Bayreuth (DE)

(74) Vertreter: Von Rohr Patentanwälte Partnerschaft mbB
Patentanwälte Partnerschaft
Rüttenscheider Straße 62
45130 Essen (DE)

(56) Entgegenhaltungen:
EP-A- 0 444 995      EP-A- 0 591 840
EP-A- 1 790 904      WO-A-01/84041
CA-A- 1 009 997      DE-A1-102005 053 300
DE-U1-202004 017 036  DE-U1-202006 003 602
US-A- 3 977 849      US-A- 4 018 190
US-A- 5 858 067      US-A- 5 985 008
US-A1- 2005 287 407   US-A1- 2006 283 864
US-A1- 2007 068 389   US-B1- 6 309 446

**Beschreibung**

Die vorliegende Erfindung betrifft das technische Gebiet der Speicherung und Bereitstellung gasförmiger Kraft- bzw. Brennstoffe, wie insbesondere Wasserstoff. In diesem Zusammenhang betrifft die vorliegende Erfindung insbesondere einen Speicherbehälter für gasförmige Kraftstoffe und dessen Anwendungen.

Insbesondere betrifft die vorliegende Erfindung eine Tankstelle gemäß dem Oberbegriff von Patentanspruch 1 sowie ein Verfahren zum Befüllen eines Speicherbehälters gemäß dem Oberbegriff von Patentanspruch 8.

Speicherbehälter können beispielsweise als sogenannte Adsorptionsspeicher ausgebildet sein. Natürlich ist die Erfindung nicht auf diese bestimmte Anwendung beschränkt. Grundsätzlich ist das Speichersystem gemäß der vorliegenden Erfindung für jede Art von Speicherung anwendbar, bei der ein - insbesondere aus einem Innenbehälter und Außenbehälter bestehender - Speicherbehälter genutzt wird, um ein zu speicherndes Medium, beispielsweise ein Gas, eine Flüssigkeit oder möglicherweise aber auch eine andersartige Befüllung in einem Feststoff aufzunehmen.

Nachfolgend wird die Erfindung zur Verdeutlichung jedoch hauptsächlich anhand eines Adsorptionsspeichersystems beschrieben.

Insbesondere betrifft die vorliegende Erfindung das technische Gebiet der Wasserstoffspeicherung, welches in letzter Zeit erheblich an Bedeutung gewonnen hat.

Wasserstoff wird als Nullemissionsbrennstoff in bezug auf Emissionen von giftigen oder das Klima beeinflussenden Prozeßgasen angesehen, weil bei seinem Einsatz, beispielsweise in thermischen Brennkraftmaschinen, in Brennstoffzellenanwendungen oder dergleichen, nahezu nur Wasser erzeugt wird. Folglich ist die Schaffung geeigneter Speichermittel für die effiziente Speicherung von Wasserstoff ein bedeutendes Ziel, welches erreicht werden muß, bevor sich eine weitverbreitete Verwendung von Wasserstoff als Brennstoff einstellen kann.

Es ist bereits grundsätzlich bekannt, Wasserstoff an geeigneten Adsorptionsmitteln (z. B. auf Kohlenstoffbasis) - im Rahmen der Erfindung synonym auch Sorbens bzw. Sorbentien genannt- zu adsorbieren. Bei derartigen Adsorptionsmaterialien handelt es sich beispielsweise um Aktivkohle. Adsorption bedeutet im Lichte der vorliegenden Erfindung die Anlagerung von Gasen oder gelösten Stoffen an der Grenzfläche einer festen oder flüssigen Phase, dem Sorbens. Das Sorbens dient beispielsweise als Speichermaterial für den Wasserstoff. Der Begriff "Sorbens" - im Plural "Sorbentien" - wird im Rahmen der vorliegenden Erfindung somit verwendet, um das Adsorptions- bzw. Speichermittel (z. B. Aktivkohle) als solches zu bezeichnen (bisweilen wird im Rahmen der vorliegenden Erfindung synonym auch der speziellere Begriff "Adsorbens" bzw. "Adsorbentien" verwendet); dagegen wird im Rahmen der vorliegenden Erfindung - in Abgrenzung zu dem Begriff des Sorbens - der Begriff "Sorptionsmaterial" verwendet, um das Sorbens zusammen mit den adsorbierten Stoff bzw. Gas, dem sogenannten Adsorbat, zu bezeichnen (z. B. also das Adsorbens mit dem hieran adsorbierten gasförmigen Brenn- bzw. Kraftstoff, wie z. B. die Aktivkohle mit dem hieran adsorbierten Wasserstoff), d. h. also als Gleichung ausgedrückt:

$$\text{Sorbens (z. B. Aktivkohle)} + \text{Adsorbat (z. B. } H_2\text{)} = \text{Sorptionsmaterial.}$$

Das Speicher- bzw. Sorptionsmaterial ist vorzugsweise in einem Speicherbehälter, dem Adsorptionsspeicher, untergebracht, in dem der Wasserstoff gespeichert wird.

Die Entnahme des Wasserstoffs erfolgt über die sogenannte Desorption. Hierbei handelt es sich um den der Adsorption entgegenlaufenden Prozeß. Wenn im weiteren Verlauf der Beschreibung auf den Prozeß der Adsorption hingewiesen wird, so soll der Prozeß der Desorption natürlich immer auch mitberücksichtigt sein. Bei der Desorption wird der am Adsorptionsmaterial adsorbierte Wasserstoff unter Aufbringung von Energie vom Sorbens bzw. Sorptionsmaterial freigegeben bzw. losgelöst oder getrennt.

Das Problem bei der Adsorption von Medien auf Adsorptionsmaterialien liegt oft im Management der auftretenden Wärmetönungen, d. h. Adsorptionsenergien bzw. Desorptionsenergien bei der Adsorption bzw. Desorption. So kann es zu lokaler Abkühlung bzw. Überhitzung der Adsorbentien kommen, da die Adsorbentien, wie beispielsweise Aktivkohle mit hoher spezifischer Oberfläche, nur schlechte Wärmeleitfähigkeiten haben. Auch die Konvektion als Mittel des Wärmetransports in der Gasphase ist aufgrund der großen Reibungsverluste an den Porenwänden der Adsorbentien stark eingeschränkt. Die Kinetik der Adsorption und Desorption wird wesentlich auch durch den langsamen Gastransport durch die poröse Struktur der Adsorbentien begrenzt.

Wie vorstehend bereits ausgeführt, sind die Sorbentien meistens porös ausgebildet und besitzen eine hohe spezifische Oberfläche. Sie sind deshalb oftmals sehr schlecht thermisch leitfähig. Wenn man nun Wasserstoff oder ein anderes Gas daran adsorbiert, dann tritt Adsorptionswärme auf, die wiederum bewirkt, daß das Material erwärmt und das adsorbierte Gas teilweise wieder desorbiert wird. Man muß folglich versuchen, die Wärme wegzutransportieren. Analoges gilt auch für die Desorption. Bei dieser muß man Wärme an die Adsorptionsmaterialien heranbringen, um die Desorption zu bewerkstelligen.

Zum Speichern von Gasen durch Adsorption - insbesondere auf sogenannten High-Surface-Materialien - wird die Temperatur des Speichersystems sowie des Speichermediums, beispielsweise eines Gases, vorteilhaft auf kryogenische Bereiche gesenkt, um bessere Speicherkapazitäten zu erreichen. Dies erfordert die Abfuhr einer großen Menge an Energie. Hinzu kommt noch die durch Adsorption vom Speichermedium freigesetzte Energie, die ebenfalls noch abgeführt werden muß. Zum Austreiben des Speichermediums muß dem Speichersystem hingegen Energie zugeführt werden, um dessen Temperatur auf Raumtemperaturbereich zu erhöhen und um die notwendige Desorptionsenergie zur Verfügung zu stellen.

Damit diese beiden dynamischen Vorgänge des Speichersystems möglichst schnell stattfinden können, ist eine effiziente Energiezufuhr bzw. Energieabfuhr erforderlich.

Es sind im Stand der Technik bereits eine Reihe von Lösungen bekannt, die sich mit der Speicherung von Wasserstoff, insbesondere mit der Adsorptions- und Desorptionsproblematik, beschäftigen. Beispielsweise sind in der WO 2005/044454 A2 ein Speichersystem zum Speichern eines Mediums, beispielsweise Wasserstoff, sowie ein Verfahren zum Beladen/Entladen eines Speichersystems mit einem Speichermedium beschrieben. Das Speichersystem verfügt über einen Speicherbehälter, der vorteilhaft als Druckbehälter ausgebildet ist. In diesem Speicherbehälter befindet sich ein Speichermaterial in Form eines Sorbens. Ein zu speicherndes Gas, beispielsweise Wasserstoff, wird in den Speicherbehälter eingebracht und unter geeigneten Bedingungen am Sorbens adsorbiert. Zur Entnahme des Gases wird dieses anschließend zunächst desorbiert. Das Sorbens verbleibt die ganze Zeit im Speicherbehälter, die Adsorption findet folglich innerhalb des Speicherbehälters statt.

Auch in der DE 10 2005 023 036 A1 wird von einem in einem Tanksystem verbleibenden Sorbens bzw. Sorptionsmaterial ausgegangen. Die bei der Beladung entstehenden großen Mengen an Adsorptionswärme müssen aus dem Tanksystem abgeführt werden. Dies erfordert einen Wärmetauscher im Tanksystem und kostet viel Zeit beim Betanken. In der DE 26 15 630 A1 wird eine Kühlvorrichtung zum Kühlen eines Hochdrucktanks beschrieben.

Die US 5 858 067 A betrifft eine Vorrichtung zur Herstellung eines ein fluides Sorbens aufweisenden Abgabe- bzw. Freisetzungsbehälters. Die Vorrichtung umfasst einen Fluidisierungsbehälter zur Aufnahme eines Fließbetts eines physikalischen Sorptionsmaterials in fester Phase; Mittel zur Beladung bzw. Beschickung des physikalischen Sorptionsmaterials in fester Phase in den Fluidisierungsbehälter zur dortigen Fluidisierung; Mittel zur Fluidisierung des physikalischen Sorptionsmaterials in fester Phase mit einem sorbierbaren Gas, wobei das Sorptionsmaterial in fester Phase mit dem Gas beladen wird; einen Speicher- und Abgabebehälter; und Mittel zum Transport des mit dem Gas beladenen Sorptionsmaterials von den Fluidisierungsbehälter in den Speicher- und Abgabebehälter.

Weiterhin betrifft die US 2005/0287407 A1 ein Wasserstoffspeichersystem, welches einen offenen Gaskreislauf *(open gas circuit)* mit einer Wasserstoffquelle umfasst. Das System umfasst zudem einen Kompressor, welcher einen Wasserstofffluss von der Wasserstoffquelle durch den offenen Gaskreislauf ermöglicht, und ein Wasserstoffspeichergefäß mit einem Einlass und einem Auslass und einem Wasserstoffspeicherbett, welches in dem Wasserstoffspeichergefäß zwischen dem Einlass und dem Auslass positioniert ist. Das Wasserstoffspeichergefäß ist derart konzipiert, dass es einen Abschnitt des offenen Gaskreislaufs bildet, so dass das Wasserstoffspeicherbett durch Konvektion gekühlt wird, wenn Wasserstoff durch den offenen Gaskreislauf strömt.

Die US 4 018 190 A betrifft zudem ein Verfahren sowie eine Vorrichtung zur Zuführung von Wasserstoff, welcher aus einem Metallhydrid freigesetzt wird, zu einer Verbrennungsmaschine. Die Vorrichtung weist zwei Tanks auf: einer enthält frisches Hydrid während der andere das verbrauchte Hydrid aufnimmt. Zwischen den beiden Tanks ist ein Reaktor angeordnet, durch welchen das Hydrid gepumpt wird. In dem Reaktor wird mittels Hitze aus dem Hydrid Wasserstoff freigesetzt, in einem Vorratsgefäß gesammelt und der Verbrennungsmaschine zugeführt. Durch die Verwendung eines kleinen Reaktors, in welchem der Wasserstoff aus dem Hydrid freigesetzt wird, sollen ein schneller Beginn sowie ein schnelles Ende der Wasserstoffgewinnung und damit eine hohe Flexibilität der Vorrichtung im Gebrauch möglich sein.

Weiterhin betrifft die WO 01/84041 A1 eine Tankanlage für aus kleinen bis kleinsten Festkörpern bestehendes, mit einem brennbaren Gas beladbares Schüttgut, das beispielsweise mit Wasserstoff anfüllbar ist, sowie eine Einrichtung zum Entladen des Schüttgutes.

Ein großes Problem von Sorptionsspeichern ist das Abführen der beim Betankungsvorgang freiwerdenden Sorptionswärme. Die beim Betankungsvorgang freiwerdende Sorptionsenthalpie muß kurzfristig abgeführt werden. Für diesen Prozeß ist ein Wärmetauscher mit entsprechend großer Kühlleistung notwendig. Neben der Aufgabenstellung, große Mengen an Kühlmittel abzutransportieren, verlängert die Notwendigkeit der Wärmeabführung den Betankungsvorgang wesentlich. Zudem verringert der zusätzliche Volumen- und Gewichtsbedarf die volumetrischen und gravimetrischen Speicherkapazitäten und erhöht zudem die aufzuwendenden Kosten für das dezentral vorzunehmende Wärmemanagement.

Der vorliegenden Erfindung liegt die Aufgabe zugrunde, Lösungen bereitzustellen, mittels derer die vorgenannten Nachteile zumindest weitgehend vermieden oder aber wenigstens abgeschwächt werden können. Insbesondere sollen Lösungen zum Speichern von Gasen, insbesondere von Wasserstoff, bereitgestellt werden, mittels derer die entstehende Sorptionswärme insbesondere ohne Zeitprobleme und mit niedrigem Kosten- und Energieaufwand abgeführt werden kann.

Diese Aufgabe wird erfindungsgemäß gelöst durch eine Tankstelle mit den Merkmalen gemäß dem unabhängigen Patentanspruch 1 sowie das Verfahren zum Befüllen eines Speicherbehälters gemäß dem unabhängigen Patentanspruch 8. Weitere Merkmale, Ausgestaltungen, Ausführungsformen und Details der Erfindung ergeben sich aus den jeweiligen Unteransprüchen, der Beschreibung sowie den Zeichnungen. Dabei gelten Merkmale, Ausgestaltungen, Ausführungsformen und Details, die im Zusammenhang mit einem bestimmten Erfindungsaspekt beschrieben sind, selbstverständlich auch im Zusammenhang mit den jeweils anderen Erfindungsaspekten, und entsprechend umgekehrt.

Die vorliegende Erfindung basiert auf dem Grundgedanken, daß mit Gas, beispielsweise Wasserstoff, beladene Sorbentien in einem externen System, beispielsweise einer Tankstelle, bevorratet werden und dann gegenüber verbrauchtem Sorptionsmaterial in einem Speicherbehälter, beispielsweise einem mobilen Tank, ausgetauscht werden. Dadurch kann ein Befüllungsvorgang, beispielsweise ein Betankungsvorgang, drastisch verkürzt werden. Die verbrauchten bzw desorbierten Sorptionsmaterialien werden dann im externen System - und nicht mehr, wie bisher üblich, im Speicherbehälter selbst- erneut mit Gas, beispielsweise Wasserstoff, beladen und stehen für einen erneuten Befüllungsvorgang zur Verfügung. Hierzu sind in besonderer Weise ausgebildete bzw. ausgewählte Sorbentien erforderlich, die durch die vorliegende Erfindung ebenfalls bereitgestellt werden.

Ein großer Vorteil der vorliegenden Erfindung ist beispielsweise auch ein vollständiges Recyclingsystem, bei dem entladene Sorbentien bzw. Sorptionsmaterialien wieder gegen beladene Sorbentien bzw. Sorptionsmaterialien ausgetauscht werden. Von Zeit zu Zeit kann beispielsweise ein gewisser Prozentsatz der Sorbentien gegen frisch hergestellte Sorbentien ausgetauscht werden. Aufgrund der hohen Abriebfestigkeit der erfindungsgemäß eingesetzten Sorbentien besteht eine jahrelange Nutzungsmöglichkeit für eine Produktcharge an Sorbentien.

Gemäß dem **ersten** Aspekt der Erfindung wird eine Tankstelle zum Bereitstellen eines ein Sorbens und ein hieran adsorbiertes Adsorbat, insbesondere einen gasförmigen Kraftstoff, vorzugsweise Wasserstoff, umfassenden Sorptionsmaterials für einen Speicherbehälter eines mobilen Tanksystems, bereitgestellt,

**dadurch gekennzeichnet,**

dass eine Beschickungsvorrichtung vorgesehen ist, die eine Einrichtung zum Entladen von in dem Speicherbehälter befindlichem verbrauchtem Sorptionsmaterial und eine Einrichtung zum Befüllen des Speicherbehälters mit unverbrauchtem Sorptionsmaterial aufweist, wobei der Speicherbehälter einen Druckbehälter, ein Verbindungselement zu der Beschickungsvorrichtung, eine Transportführung zum Beladen und/oder Entladen des Speicherbehälters und wenigstens eine zweite Führung zum Zuführen und/oder Abführen eines Gases aufweist,

dass eine Speichereinrichtung zum Speichern von an den Speicherbehälter abzugebendem Sorptionsmaterial vorgesehen ist, die zumindest zeitweilig mit der Beschickungsvorrichtung verbunden ist, und

dass das Sorbens auf der Grundlage von Hochleistungsadsorbentien auf der Basis von Aktivkohle in Form von diskreten Aktivkohlekörnern, vorzugsweise in Kugelform, ausgebildet ist, wobei mindestens 70 % des Gesamtporenvolumens der Hochleistungsadsorbentien durch Mikroporen mit Porendurchmessern von $\leq$ 20 A gebildet sind.

In diesem Zusammenhang ist es somit erfindungsgemäß vorgesehen, dass die Tankstelle einen Speicherbehälter zum Speichern eines Sorptionsmaterials enthält, wobei der Speicherbehälter mit einem Druckbehälter, einem Verbindungselement zu einem externen Bereitstellungssystem und wenigstens einem Sorptionsmaterial, welches zumindest während des betriebsgemäßen Gebrauchs des Speicherbehälters in diesem eingelagert ist, sowie mit einer Transportführung zum Beladen und/oder Entladen des Speicherbehälters mit Sorptionsmaterial ausgestattet ist, wobei das Sorptionsmaterial ein Sorbens und ein hieran adsorbiertes Adsorbat, insbesondere einen gasförmigen Kraftstoff, vorzugsweise Wasserstoff, umfaßt. Der Speicherbehälter ist erfindungsgemäß dadurch gekennzeichnet, daß einerseits wenigstens eine zweite Führung zum Zuführen und/oder Abführen eines Gases (Gasführung) vorgesehen ist und daß andererseits das Sorbens auf der Grundlage von Hochleistungsadsorbentien auf der Basis von Aktivkohle in Form von diskreten Aktivkohlekörnern, vorzugsweise in Kugelform, ausgebildet ist, wobei mindestens 70 % des Gesamtporenvolumens der Hochleistungsadsorbentien durch Mikroporen mit Porendurchmessern von $\leq$ 20 A gebildet sind (d. h. mit anderen Worten hochmikroporöse Hochleistungsadsorbentien eingesetzt sind). Gemäß einer bevorzugten Ausführungsform weisen die erfindungsgemäß eingesetzten Hochleistungsadsorbentien ein Gesamtporenvolumen nach Gurvich von mindestens 0,7 cm$^3$/g auf, wobei mindestens 70 % dieses Gesamtporenvolumens durch Mikroporen mit Porendurchmessern von $\leq$ 20 A gebildet sind.

Wie die Anmelderinnen überraschend und unerwartet herausgefunden haben, eignet sich eine hochmikroporöse Aktivkohle der vorgenannten Art in besonderer Weise für die vorliegende Erfindung, da zum einen eine derartige Aktivkohle eine extrem hohe Beladungskapazität in bezug auf die relevanten Kraft- bzw. Brennstoffgase, insbesondere Wasserstoff, aufweist und zum anderen eine derartige Aktivkohle eine für die erfindungsgemäßen Anwendungszwecke optimales Adsorptions- und Desorptionsverhalten besitzt. Darüber hinaus besitzt die betreffende Aktivkohle eine extrem hohe Abriebfestigkeit und verfügt damit über ausgezeichnete Verschleißeigenschaften, was ihren Langzeiteinsatz, insbesondere über mehrere Monate oder sogar Jahre, und weiterhin eine Rezyklierung ermöglicht. Aufgrund der Abriebfestigkeit und Staubfreiheit der erfindungsgemäß eingesetzten Hochleistungsadsorbentien wird zudem eine Verunreinigung der eingesetzten apparativen Komponenten in effizienter Weise vermieden und auch die Gefahr von Entzündungen bzw. Explosionen ausgeschlossen oder aber zumindest weitgehend minimiert. Schließlich erleichtert die Kugelform der eingesetzten Sorbentien den Be- und Entladungsvorgang nicht unbeträchtlich. Weitere mit dem Einsatz der erfindungsgemäß ausgewählten Aktivkohle verbundene Vorteile werden nachfolgend noch bei der detaillierten Charakterisierung der erfindungsgemäß eingesetzten Aktivkohle erläutert und ergeben sich für den Fachmann beim Studium der Beschreibung, der Ansprüche und der Figurendarstellungen.

Eine für die erfindungsgemäßen Zwecke geeignete Aktivkohle ist insbesondere in der deutschen Patentanmeldung 10 2000 048 790.7 vom 12. Oktober 2006 und der parallelen deutschen Gebrauchsmusteranmeldung 20 2006 016 898.2 vom 4. November 2006, deren gesamter jeweiliger Offenbarungsgehalt hiermit durch Bezugnahme eingeschlossen ist, offenbart und ist im übrigen von der Blücher GmbH, Erkrath, sowie der Adsor-Tech GmbH, Premnitz, kommerziell erhältlich.

Der erfindungsgemäße Speicherbehälter ist derart ausgebildet, daß er von außen zugeführtes Sorptionsmaterial, an dem ein Gas adsorbiert ist, aufnehmen kann. In seinem Betriebszustand ist der Speicherbehälter mit Sorptionsmaterial befüllt und kann adsorbiertes Gas, beispielsweise Wasserstoff, je nach Bedarf an einen Verbraucher abgeben. Wenn der Speicherbehälter neu befüllt werden muß, wird das verbrauchte Sorptionsmaterial aus diesem entfernt und durch neues, nichtverbrauchtes Sorptionsmaterial ersetzt. Auch diesbezüglich ist der Speicherbehälter in besonderer Weise ausgestaltet. Wie dies im einzelnen realisiert werden kann, wird anhand einiger vorteilhafter, jedoch nicht ausschließlicher Beispiele im weiteren Verlauf der Beschreibung näher erläutert.

Zunächst ist vorteilhafterweise vorgesehen, daß der Speicherbehälter einen Innenbehälter zur Aufnahme des Sorptionsmaterials aufweist, der dann den eigentlichen Druckbehälter darstellt. Weiterhin ist vorteilhafterweise ein zweiter, außerhalb des Innenbehälters befindlicher Außenbehälter vorgesehen, der in erster Linie die Funktion eines Isolationsbehälters aufweist. Der Außenbehälter kann auch dazu dienen, den Innenbehälter vor Beschädigungen zu schützen.

Vorzugsweise ist zwischen dem Innenbehälter und dem Außenbehälter ein Isolationsbereich vorgesehen. Dieser Isolationsbereich kann beispielsweise als eine Art Hohlraum ausgebildet sein, in welchem sich ein Isolationsmaterial befinden kann. Das Isolationsmaterial kann dabei fest, flüssig oder gasförmig sein. Auch ist denkbar, daß der Isolationsbereich in Form einer Isolationsschicht ausgebildet ist, bei der es sich beispielsweise um eine Folie, Matte oder dergleichen handeln kann, die zwischen Außen- und Innenbehälter angeordnet ist.

Im folgenden werden einige bevorzugte Ausgestaltungen für den Speicherbehälter beschrieben, ohne daß die Erfindung jedoch auf diese genannten Beispiele beschränkt ist.

Ziel dabei ist ein mechanisch möglichst einfaches Be- und Entladesystem, um aufwendige Konstruktionen sowie bewegliche Teile innerhalb des Speicherbehälters zu vermeiden. Der Grundgedanke ist es, das granulatförmige, vorzugsweise korn- bzw. kugelförmige Sorptionsmaterial über einen Gasstrom bei praktisch beliebigem Druck, insbesondere etwa bis zu ca. 40 bar, zu transportieren.

Der Speicherbehälter sollte dabei grundsätzlich zwei Öffnungen/Durchführungen für Medien aufweisen, die im folgenden als Führungen bezeichnet werden. Eine erste Führung stellt die so genannte Transportführung dar, die in erster Linie für den Transport der Sorptionsmaterialien verantwortlich ist. Diese Führung dient beispielsweise zum Transport des Sorptionsmaterials sowohl von der Tankstelle zum Tanksystems sowie auch vom Tanksystem zur Tankstelle. Eine zweite Führung wird durch eine Gasführung gebildet, über welche Gase in den Behälter hineingeleitet und aus diesem herausgeleitet werden können. Dies wird im weiteren Verlauf der Beschreibung näher erläutert.

Vorteilhaft kann/können die Transportführung und/oder die Gasführung rohrförmig ausgebildet sein. Dabei ist die Erfindung nicht auf bestimmte Rohrquerschnitte beschränkt. Diese ergeben sich vielmehr aus den strömungstechnischen Anforderungen. Vorteilhaft ist jedoch ein kreisrunder oder ovaler Querschnitt vorgesehen.

Vorzugsweise kann/können die Transportführung und/oder die Gasführung in Form einer Düse ausgebildet sein. Dadurch läßt sich besonders vorteilhaft ein geeigneter Strömungsverlauf innerhalb des Speicherbehälters realisieren.

Um einen unerwünschten Austrag von Sorptionsmaterial aus dem Speicherbehälter zu vermeiden, kann in der Gasführung bevorzugt wenigstens ein Filterelement zum Filtern von Sorptionsmaterial und/oder Sorbens vorgesehen sein.

Die erste Durchführung (Transportführung) ist vorteilhaft mit einem im Verhältnis zur Partikelgröße des Sorptionsmaterials verhältnismäßig großen Durchmesser ausgestattet, beispielsweise einem Durchmesser von mindestens dem 50fachen der Partikelgröße.

Die zweite Durchführung (Gasführung) ist vorteilhaft düsenförmig ausgeführt und weist einen Filter auf, der eindringende Sorptionsmaterialpartikel zurückhält. Diese Düse dient bei Befüllung des Tanksystems (Speicherbehälters) als Gasauslaß. Bei einer Beladung des Tanksystems mit frischem Sorptionsmaterial wird dieses über einen Volumenstrom über die erste Durchführung (Transportführung) in das Tanksystem eingebracht. Ein dazu benötigtes Trägergas (beispielsweise Wasserstoffträgergas) verläßt das System über die zweite Durchführung (Gasführung). Bei einer Entladung des Tanksystems strömt Gas, beispielsweise Wasserstoffgas, über die zweite, als Düse ausgeführte Durchführung (Gasführung) in das Tanksystem. Durch die hohe Strömungsgeschwindigkeit am Auslaß und der Position der Düse im Tanksystem wird im Tanksystem vorhandenes Sorptionsmaterial aufgewirbelt und über die erste Durchführung (Transportführung) durch die Gasströmung aus dem Tanksystem transportiert. Somit kann das Tanksystem be- und entladen werden.

In weiterer Ausgestaltung können die Transportführung und die Gasführung im Speicherbehälter miteinander verbunden sein und eine Rohrschleife bilden. Diese Ausgestaltung macht sich den dynamischen Druckabfall an Stellen mit erhöhter Strömungsgeschwindigkeit gemäß der Bernoulligleichung

$$\frac{1}{2}\,\rho\,v^2 \;+\; \rho\,g\,h \;+\; p \;=\; \text{const.}$$

zunutze (Venturirohr). Es handelt sich vorteilhaft um eine geschlossene Rohrschleife mit möglichst geringem Innenströmungswiderstand.

Vorteilhaft kann/können in der Rohrschleife wenigstens eine drehbare Klappe, vorzugsweise zwei Klappen, zum Verändern des Förderstroms innerhalb der Rohrschleife vorgesehen sein.

Beispielsweise kann die Rohrschleife an zwei Stellen von um 90° drehbaren, strömungsangetriebenen Klappen unterbrochen werden. Ziel dieser Klappen ist die Umlenkung des Förderstroms (Sorptionsmaterial + Trägergas) während des Befüllungsvorgangs. Die erste Klappe schließt den Durchlaß durch das Rohrsystem und bedingt dadurch die Einbringung des Sorptionsmaterials in den Speicherbehälter. Das Trägergas wird über die zweite Klappe zurück in das Rohrsystem befördert und kann beispielsweise zur Zapfsäule zurückgeführt werden. Bei der Entleerung des Speicherbehälters durchströmt das Trägergas die Rohrschleife in entgegengesetzter Richtung. Eine Verengung der Rohrschleife (vgl. das oben beschriebene Venturiprinzip) führt zur Verringerung des statischen Drucks im Rohrstück und dadurch zu einem Ansaugen von Sorptionsmaterial aus dem Speicherbehälter. Das Sorptionsmaterial wird in den Trägerstrom dispergiert und aus dem Speicherbehälter ausgetragen.

Ein Filter vor der/den Klappe(n) kann den unerwünschten Austrag von Sorptionsmaterial verhindern. Vorteilhaft kann daher in der Rohrschleife wenigstens ein Filterelement zum Filtern von Sorptionsmaterial und/oder Sorbens vorgesehen sein, wobei das Filterelement vorzugsweise im Bereich der drehbaren Klappe(n) angeordnet ist.

Vorteilhaft kann der Speicherbehälter zumindest während des Befüllungsvorgangs und/oder Entladungsvorgangs in eine(r) Schrägstellung, bezogen auf eine horizontale oder vertikale Referenzebene (je nachdem, ob der Speicherbehälter senkrecht oder waagerecht angeordnet ist), bringbar oder ausgerichtet sein. Eine leichte Schrägstellung des Speicherbehälters und eine günstige Positionierung des Venturiteilstücks in der Nähe des tiefsten Punkts übernehmen mittels Nutzung der Schwerkraft auf der schiefen Ebene die Aufgabe, das Sorptionsmaterial in die Reichweite der Ansaugung zu transportieren.

Gemäß einer weiteren Ausgestaltung kann vorgesehen sein, daß die Transportführung und die Gasführung in einer einzigen Führung zusammengefaßt sind und daß die Führung als Aufnahme für einen Befüllungs-/Entladungs-Stutzen ausgebildet ist. Diese Ausgestaltung kommt insbesondere mit einem weiter unten noch näher beschriebenen Befüllungs-/Entladungs-Stutzen zum Einsatz. Vorteil dieser Ausführungsform ist die Entkopplung der für die Befüllung und Entladung benötigten Komponenten vom Speicherbehälter, und somit eine wesentliche Ersparnis von Gewicht und Wärmekapazität. Die Aufgabe der Zu- und Abführung von Sorptionsmaterial und Trägergas übernimmt ein in den Speicherbehälter eingeführter Stutzen, der auch flexibel gestaltet sein kann und der sich vorteilhaft dadurch auszeichnet, daß die Länge des Stutzens im Speicherbehälter nachjustiert werden kann, um das Sorptionsmaterial möglichst ortsnah aufwirbeln und abführen zu können.

Vorteilhaft kann wenigstens ein Sensorelement zur Messung betriebsspezifischer Eigenschaften des Speicherbehälters und/oder des Sorptionsmaterials und/oder des Sorbens vorgesehen sein. Derartige Meßwerte können, wie im weiteren Verlauf noch näher erläutert wird, dazu verwendet werden, um den Befüllungs- und Entladevorgang weiter zu optimieren.

In einem solchen Fall kann vorteilhaft wenigstens eine Schnittstelle zur Übertragung von über das wenigstens eine Sensorelement erfaßten Werten vorgesehen sein. Hierbei kann es sich besonders vorteilhaft um eine Datenschnittstelle handeln.

Auch wenn der Speicherbehälter zum Speichern beliebiger gasförmiger Medien verwendet werden kann, so kann dieser besonders bevorzugt als Speichertank für einen gasförmigen Kraftstoff, insbesondere für Wasserstoff, ausgebildet sein.

Wie zuvor beschrieben, kommen im Rahmen der vorliegenden Erfindung als eingesetztes Sorbens bevorzugt Hochleistungsadsorbentien auf der Basis von Aktivkohle mit hoher Mikroporosität zum Einsatz, wie sie Gegenstand der deutschen Patentanmeldung 10 2006 048 790.7 sowie der parallelen deutschen Gebrauchsmusteranmeldung 20 2006 016 898.2, beide im Namen der Blücher GmbH, Erkrath, sind.

Derartige Hochleistungsadsorbentien auf der Basis von Aktivkohle in Form von diskreten Aktivkohlekörnern, vorzugsweise in Kugelform, sind durch eine hohe Mikroporosität gekennzeichnet, wobei erfindungsgemäß mindestens 70 % des Gesamtporenvolumens der erfindungsgemäß eingesetzten Hochleistungsadsorbentien durch Mikroporen mit Porendurchmessern von $\leq 20$ A gebildet sind. Gemäß einer bevorzugten Ausführungsform der vorliegenden Erfindung weisen die erfindungsgemäß eingesetzten Hochleistungsadsorbentien ein Gesamtporenvolumen nach Gurvich von mindestens 0,7 cm$^3$/g auf, wobei mindestens 70 % dieses Gesamtporenvolumens durch Mikroporen mit Porendurchmessern von ≤ 20 Å gebildet sind.

Darüber hinaus weisen die im Rahmen der vorliegenden Erfindung als Sorbentien eingesetzten aktivkohlebasierten Hochleistungsadsorbentien der vorgenannten Art einen mittleren Porendurchmesser von höchstens 30 Å und/oder eine BET-Oberfläche von mindestens 1.500 m$^2$/g auf.

Die im Rahmen der vorliegenden Erfindung als Sorbentien eingesetzten Hochleistungsadsorbentien auf der Basis von Aktivkohle in Form von diskreten Aktivkohlekörnern, vorzugsweise in Kugelform, sind somit insbesondere durch die folgenden Parameter gekennzeichnet sind:

- einen Anteil an Mikroporen mit Porendurchmessern von ≤ 20 A von mindestens 70 % des Gesamtporenvolumens, besonders bevorzugt ein Gesamtporenvolumen nach Gurvich von mindestens 0,7 cm$^3$/g, wobei mindestens 70 % dieses Gesamtporenvolumens durch Mikroporen mit Porendurchmessern von ≤ 20 A gebildet sind, und/oder

- einen mittleren Porendurchmesser von höchstens 30 Å und/oder

- eine BET-Oberfläche von mindestens 1.500 m$^2$/g.

Die erfindungsgemäß eingesetzten Hochleistungsadsorbentien bzw. Aktivkohlen zeichnen sich insbesondere durch eine große Gesamtporosität und eine gleichzeitig große BET-Oberfläche aus. Wie nachfolgend noch ausgeführt wird, ist trotz der hohen Porosität auch die mechanische Belastbarkeit, insbesondere die Abriebfestigkeit und die Berst- bzw. Druckbelastbarkeit, der erfindungsgemäß eingesetzten Hochleistungsadsorbentien - im Unterschied zu vergleichbaren hochporösen Aktivkohlen des Standes der Technik - extrem hoch, so daß die erfindungsgemäß eingesetzten Hochleistungsadsorbentien bzw. Aktivkohlen auch für solche Anwendungen geeignet sind, bei denen sie großen mechanischen Belastungen ausgesetzt sind.

Bei allen vorstehend genannten und noch im folgenden genannten Parameterangaben ist zu beachten, daß die aufgeführten Grenzwerte, insbesondere Ober- und Untergrenzen, mitumfaßt sind, d. h. alle Werteangaben verstehen sich einschließlich der jeweiligen Grenzen. Weiterhin versteht es sich von selbst, daß es einzelfallbedingt oder anwendungsbezogen gegebenenfalls erforderlich sein kann, von den genannten Grenzwerten abzuweichen, ohne daß der Rahmen der vorliegenden Erfindung verlassen ist.

Die vorgenannten und im folgenden noch genannten Parameterangaben für die erfindungsgemäß eingesetzten Hochleistungsadsorbentien werden mit genormten oder explizit angegebenen Bestimmungsverfahren oder dem Fachmann an sich geläufigen Bestimmungsmethoden bestimmt. Die Parameterangaben betreffend die Charakterisierung der Porosität ergeben sich jeweils aus der Stickstoffisotherme der vermessenen Aktivkohle.

Was die Bestimmung des Gesamtporenvolumens nach Gurvich anbelangt, so handelt es sich um eine dem Fachmann auf diesem Gebiet an sich bekannte Meß/Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technology Series, Seiten 111 ff.

Die Bestimmung der spezifischen Oberfläche gemäß BET ist dem Fachmann grundsätzlich als solches bekannt, so daß diesbezüglich keine weitergehenden Einzelheiten ausgeführt werden zu brauchen. Alle BET-Oberflächenangaben beziehen sich auf die Bestimmung gemäß ASTM D6556-04. Im Rahmen der vorliegenden Erfindung wird zur Bestimmung der BET-Oberfläche die sogenannte Multi-Point-BET-Bestimmungsmethode (MP-BET) in einem Partialdruckbereich $p/p_0$ von 0,05 bis 0,1 angewendet. In bezug auf weitergehende Einzelheiten zur Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968) verwiesen werden.

Die Bestimmung des mittleren Porendurchmessers erfolgt auf Basis der jeweiligen Stickstoffisothermen.

Das Gesamtporenvolumen nach Gurvich der erfindungsgemäß eingesetzten Hochleistungsadsorbentien beträgt mindestens 0,7 cm$^3$/g, insbesondere mindestens 0,8 cm$^3$/g, vorzugsweise mindestens 0,9 cm$^3$/g, besonders bevorzugt mindestens 1,0 cm$^3$/g, und kann Werte bis zu 1.5 cm$^3$/g. insbesondere bis zu 1,6 cm$^3$/g, vorzugsweise bis zu 1,8 cm$^3$/g, erreichen. Im allgemeinen liegt das Gesamtporenvolumen nach Gurvich der erfindungsgemäß eingesetzten Hochleistungsadsorbentien im Bereich von 0,7 bis 1,8 cm$^3$/g, insbesondere 0,8 bis 1,6 cm$^3$/g, vorzugsweise 0,9 bis 1,5 cm$^3$/g.

Eine Besonderheit der erfindungsgemäß eingesetzten Hochleistungsadsorbentien ist unter anderem darin zu sehen, daß sie über ein sehr großes Gesamtporenvolumen nach Gurvich verfügen, so daß eine große Adsorptionskapazität bereitgestellt wird, wobei ein hoher Anteil auf Mikroporen entfällt.

Im allgemeinen sind mindestens 70 %, insbesondere mindestens 75 %, vorzugsweise mindestens 80 %, besonders bevorzugt mindestens 85 %, ganz besonders bevorzugt mindestens 90 %, des Gesamtporenvolumens, insbesondere des Gesamtporenvolumens nach Gurvich, der erfindungsgemäß eingesetzten Hochleistungsadsorbentien durch Mikroporen mit Porendurchmessern von $\leq 20$ A gebildet. Im allgemeinen ist 70 % bis 95 %, insbesondere 75 bis 90 %, vorzugsweise 75 bis 85 %, des Gesamtporenvolumens, insbesondere des Gesamtporenvolumens nach Gurvich, der erfindungsgemäß eingesetzten Hochleistungsadsorbentien durch Mikroporen mit Porendurchmessern von $\leq 20$ A gebildet (Im Rahmen der vorliegenden Erfindung bezeichnet der Begriff der Mikroporen solche Poren mit Porendurchmessern bis zu 20 Å einschließlich, wohingegen der Begriff der Mesoporen solche Poren mit Porendurchmessern von > 20 A bis 50 A einschließlich bezeichnet und der Begriff der Makroporen solche Poren mit Porendurchmessern > 50 A bezeichnet.).

Aufgrund ihrer hohen Mikroporosität ist das Mikroporenvolumen der erfindungsgemäß eingesetzten Hochleistungsadsorbentien relativ hoch: Im allgemeinen liegt das durch Mikroporen mit Porendurchmessern von $\leq 20$ A gebildete Mikroporenvolumen nach Carbon Black der erfindungsgemäß eingesetzten Hochleistungsadsorbentien im Bereich von 0,5 bis 1,4 $cm^3/g$, insbesondere 0,6 bis 1,2 $cm^3/g$, bevorzugt 0,7 bis 1,1 $cm^3/g$. Die Bestimmungsmethode nach Carbon Black ist dem Fachmann an sich bekannt, so daß es diesbezüglich keiner weitergehenden Einzelheiten bedarf. Zudem kann zu weitergehenden Einzelheiten der Bestimmung der Porenoberfläche und des Porenvolumens nach Carbon Black beispielsweise verwiesen werden auf R. W. Magee, Evaluation of the External Surface Area of Carbon Black by Nitrogen Adsorption, Presented at the Meeting of the Rubber Division of the American Chem. Soc., Oktober 1994, z. B. referiert in: Quantachrome Instruments, AUTOSORB-1, AS1 WinVersion 1.50, Operating Manual, OM, 05061, Quantachrome Instruments 2004, Florida, USA, Seiten 71 ff.

Aufgrund der hohen Mikroporosität der erfindungsgemäß eingesetzten Hochleistungsadsorbentien ist deren mittlere Porendurchmesser relativ gering: Im allgemeinen beträgt er höchstens 30 Å, insbesondere höchstens 26 A, vorzugsweise höchstens 25 Å, ganz besonders bevorzugt höchstens 24 A. Im allgemeinen liegt der mittlere Porendurchmesser der erfindungsgemäß eingesetzten Hochleistungsadsorbentien im Bereich von 15 bis 30 A, insbesondere 16 bis 26 A, vorzugsweise 17 bis 25 A, besonders bevorzugt 18 bis 24 A.

Wie zuvor ausgeführt, ist eine Besonderheit der erfindungsgemäß eingesetzten Hochleistungsadsorbentien in der relativ großen BET-Oberfläche zu sehen, welche mindestens 1.500 $m^2/g$, vorzugsweise mindestens 1.525 $m^2/g$, besonders bevorzugt mindestens 1.550 $m^2/g$, ganz besonders bevorzugt mindestens 1.575 $m^2/g$, beträgt. Im allgemeinen liegt die BET-Oberfläche der erfindungsgemäß eingesetzten Hochleistungsadsorbentien im Bereich von 1.500 $m^2/g$ bis 3.500 $m^2/g$, insbesondere 1.500 $m^2/g$ bis 2.750 $m^2/g$, vorzugsweise 1.525 bis 2.500 $m^2/g$, besonders bevorzugt 1.550 bis 2.400 $m^2/g$, ganz besonders bevorzugt 1.575 bis 2.350 $m^2/g$.

Auch das gewichts- und volumenbezogene Volumen $V_{ads}$ ($N_2$) der erfindungsgemäß eingesetzten Hochleistungsadsorbentien bei unterschiedlichen Partialdrücken $p/p_0$ ist sehr groß:

So beträgt das gewichtsbezogene adsorbierte $N_2$-Volumen $V_{ads\ (gew)}$ der erfindungsgemäß eingesetzten Hochleistungsadsorbentien, bestimmt bei einem Partialdruck $p/p_0$ von 0,25, mindestens 400 $cm^3/g$, insbesondere mindestens 420 $cm^3/g$, und liegt insbesondere im Bereich von 400 bis 800 $cm^3/g$, vorzugsweise 410 bis 750 $cm^3/g$, besonders bevorzugt 420 bis 700 $cm^3/g$. Weiterhin beträgt das gewichtsbezogene adsorbierte $N_2$-Volumen $V_{ads(gew.)}$ der erfindungsgemäß eingesetzten Hochleistungsadsorbentien, bestimmt bei einem Partialdruck $p/p_0$ von 0,995, mindestens 450 $cm^3/g$, insbesondere mindestens 460 $cm^3/g$, und liegt insbesondere im Bereich von 450 bis 900 $cm^3/g$, vorzugsweise 460 bis 875 $cm^3/g$, besonders bevorzugt 470 bis 850 $cm^3/g$.

Im allgemeinen beträgt das volumenbezogene adsorbierte $N_2$-Volumen Vads (vol.) der erfindungsgemäß eingesetzten Hochleistungsadsorbentien, bestimmt bei einem Partialdruck $p/p_0$ von 0,25, mindestens 200 $cm^3/cm^3$, insbesondere mindestens 220 $cm^3/cm^3$, und liegt insbesondere im Bereich von 200 bis 300 $cm^3/cm^3$. vorzugsweise 210 bis 275 $cm^3/cm^3$, besonders bevorzugt 225 bis 260 $cm^3/cm^3$. Weiterhin beträgt das volumenbezogene adsorbierte $N_2$-Volumen $V_{ads\ (vol.)}$ der erfindungsgemäß eingesetzten Hochleistungsadsorbentien, bestimmt bei einem Partialdruck $p/p_0$ von 0,995, mindestens 250 $cm^3/cm^3$, insbesondere mindestens 260 $cm^3/cm^3$, und liegt insbesondere im Bereich von 250 bis 400 $cm^3/cm^3$, vorzugsweise 260 bis 350 $cm^3/cm^3$, besonders bevorzugt 265 bis 320 $cm^3/cm^3$.

Eine weitere Besonderheit der erfindungsgemäß eingesetzten Hochleistungsadsorbentien ist die große Mikroporenaberfläche, d. h. die große Oberfläche, welche durch Poren mit Porendurchmesser von $\leq 20$ A gebildet wird. Im allgemeinen beträgt die aus Poren mit Porendurchmessern von $\leq 20$ A gebildete Mikroporenoberfläche nach Carbon Black der erfindungsgemäß eingesetzten Hochleistungsadsorbentien mindestens 1.400 $m^2/g$, insbesondere mindestens 1.450 $m^2/g$, vorzugsweise mindestens 1.500 $m^2/g$, und liegt im allgemeinen im Bereich von 1.400 bis 2.500 $m^2/g$, insbesondere 1.450 bis 2.400 $m^2/g$, vorzugsweise 1.500 bis 2.300 $m^2/g$.

Darüber hinaus verfügen die erfindungsgemäß eingesetzten Hochleistungsadsorbentien über eine extrem hohe Butanadsorption und gleichzeitig eine extrem hohe lodzahl, was ihre Eigenschaft charakterisiert, exzellente Adsorptionseigenschaften in bezug auf verschiedenste zu adsorbierende Stoffe aufzuweisen. So liegt die gemäß ASTM D5742-95/00 bestimmte Butanadsorption der erfindungsgemäß eingesetzten Hochleistungsadsorbentien im allgemeinen bei mindestens 25 %, insbesondere bei mindestens 30 %, vorzugsweise bei mindestens 40 %; im allgemeinen weisen die erfindungsgemäß eingesetzten Hochleistungsadsorbentien eine nach ASTM D5742-95/00 bestimmte Butanadsorption im Bereich von 25 % bis 80 %, insbesondere 30 bis 70 %, vorzugsweise 35 bis 65 %, auf. Die nach ASTM D4607-94/99 bestimmte Iodzahl der erfindungsgemäß eingesetzten Hochleistungsadsorbentien liegt im allgemeinen bei mindestens 1.350 mg/g, insbesondere bei mindestens 1.450 mg/g, bevorzugt bei mindestens 1.500 mg/g; bevorzugterweise weisen die erfindungsgemäß eingesetzten Hochleistungsadsorbentien eine nach ASTM D4607-94/99 bestimmte Iodzahl im Bereich von 1.350 bis 2.100 mg/g, insbesondere 1.450 bis 2.050 mg/g, vorzugsweise 1.500 bis 2.000 mg/g, auf.

Trotz der hohen Porosität, insbesondere Mikroporosität, weisen die erfindungsgemäß eingesetzten Hochleistungsadsorbentien eine hohe Druck- bzw. Berstfestigkeit (Gewichtsbelastbarkeit) sowie eine extrem hohe Abriebfestigkeit auf. So liegt die Druck- bzw. Berstfestigkeit (Gewichtsbelastbarkeit) pro Aktivkohlekorn, insbesondere pro Aktivkohlekügelchen, bei mindestens 10 Newton, insbesondere mindestens 15 Newton, vorzugsweise mindestens 20 Newton. Im allgemeinen variiert die Druck- bzw. Berstfestigkeit (Gewichtsbelastbarkeit) pro Aktivkohlekorn, insbesondere pro Aktivkohlekügelchen, im Bereich von 10 bis 50 Newton, insbesondere 12 bis 45 Newton, vorzugsweise 15 bis 40 Newton.

Wie zuvor ausgeführt, ist auch die Abriebshärte der erfindungsgemäß eingesetzten Hochleistungsadsorbentien extrem hoch: So liegt die Abriebfestigkeit nach der Methode gemäß CEFIC (Conseil Europeen des Fédérations des l'Industrie Chimique, Avenue Louise 250, Bte 71, B - 1050 Brüssel, November 1986, European Council of Chemical Manufacturers' Federations, Testmethoden für Aktivkohlen, Ziffer 1.6 "Mechanische Härte", Seiten 18/19) stets bei 100 %. Auch nach ASTM D3802 werden Abriebfestigkeiten der erfindungsgemäß eingesetzten Hochleistungsadsorbentien von stets 100 % erhalten. Daher wurde eine modifizierte Testmethode in Anlehnung an diese CEFIC-Methode entwickelt, um aussagekräftigere Werte zu erhalten. Die modifizierte Bestimmungsmethode simuliert besser den Widerstand der Probe bzw. der Hochleistungsadsorbentien gegenüber Abrieb oder Zerreiben unter praxisnahen Bedingungen. Zu diesem Zweck wird die Probe eine definierte Zeit lang in einem horizontal schwingenden, mit einer Wolframcarbidkugel beschickten Mahlbecher unter genormten Bedingungen beansprucht. Zu diesem Zweck wird wie folgt vorgegangen: 200 g einer Probe werden eine Stunde lang bei (120 ± 2) °C im Umlufttrockenschrank (Typ: Heraeus UT 6060 der Fa. Kendro GmbH, Hanau) getrocknet und anschließend in einem Exsikkator über Trockenmittel auf Raumtemperatur abgekühlt. 50 g der getrockneten Probe werden entnommen und mittels einer Siebmaschine mit Analysensieb (Typ: AS 200 control der Fa. Retsch GmbH, Hanau) bei einer Schwinghöhe von 1,2 mm zehn Minuten lang über ein Analysensieb (Analysensieb der Maschenweite: 0,315 mm, Durchmesser: 200 mm, Höhe: 50 mm) abgesiebt; das Unterkorn wird verworfen. 5 ml des Nennkornes werden in einen 10-ml-Meßzylinder nach DIN ISO 384 (Volumen: 10 ml, Höhe: 90 mm) abgefüllt und das Gewicht mittels eines Wägeglases mit eingeschliffenem Glasdeckel (Volumen: 15 ml, Durchmesser: 35 mm, Höhe: 30 mm) auf 0,1 mg genau bestimmt mittels Analysenwaage (Typ: BP121S der Sartorius AG, Göttingen, Wägebereich: 120 g, Genauigkeitsklasse: E2, Ablesbarkeit: 0,1 mg). Die abgewogene Probe wird zusammen mit einer Wolframcarbidmahlkugel mit 20 mm Durchmesser in einen 25-ml-Mahlbecher mit Schraubverschluß (Volumen: 25 ml, Durchmesser: 30 mm, Länge: 65 mm, Werkstoff: Edelstahl) gegeben und dann der Abriebtest mittels Schwingmühle (Typ: MM301 der Fa. Retsch GmbH, Haan, Schwingmühle mit Mahlbecher) durchgeführt; dabei schwingt der Mahlbecher in horizontaler Lage eine Minute lang mit einer Frequenz von 10 Hz in der Schwingmühle, was dazu führt, daß die Mahlkugel auf die Probe einschlägt und somit Abrieb erzeugt. Anschließend wird die Probe mittels einer Siebmaschine bei einer Schwinghöhe von 1,2 mm fünf Minuten lang über das vorgenannte Analysensieb abgesiebt, wobei das Unterkorn wieder verworfen und das Nennkorn größer 0,315 mm auf 0,1 mg genau im Wägeglas mit Deckel zurückgewogen wird. Die Berechnung der Abriebhärte erfolgt als Masseanteil in % nach folgender Formel: Abriebhärte [%] = (100 x Rückwaage [g]) / Einwaage [g]. Gemäß dieser modifizierten Bestimmungsmethode in Abwandlung der vorgenannten CEFIC-Norm beträgt die Abriebfestigkeit der erfindungsgemäß eingesetzten Hochleistungsadsorbentien mindestens 95 %, insbesondere mindestens 96 %, vorzugsweise mindestens 97 %, besonders bevorzugt mindestens 98 %, ganz besonders bevorzugt mindestens 99 %.

Die erfindungsgemäß eingesetzten Hochleistungsadsorbentien sind auf Basis kornförmiger, insbesondere kugelförmiger Aktivkohle ausgebildet, deren mittlerer Teilchendurchmesser, bestimmt nach ASTM D2862-97/04, im Bereich von 0,01 bis 1,0 mm, , insbesondere 0,1 bis 0,8 mm, vorzugsweise 0,2 bis 0,7 mm, besonders bevorzugt 0,4 bis 0,55 mm, variiert.

Der Aschegehalt der erfindungsgemäß eingesetzten Hochleistungsadsorbentien, bestimmt nach ASTM D2866-94/04, beträgt höchstens 1 %, insbesondere höchstens 0,8 %, vorzugsweise höchstens 0,6 %, besonders bevorzugt höchstens 0,5 %.

Der nach ASTM D2867-04/04 bestimmte Feuchtigkeitsgehalt der erfindungsgemäß eingesetzten Hochleistungsadsorbentien beträgt höchstens 1 %, insbesondere höchstens 0,5 %, vorzugsweise höchstens 0,2 %.

Die erfindungsgemäß eingesetzten Hochleistungsadsorbentien weisen im allgemeinen eine Schüttdichte (Bulk Density), bestimmt nach ASTM B527-93/00, im Bereich von 250 bis 750 g/l, insbesondere 300 bis 700 g/l, vorzugsweise 300 bis 650 g/l, besonders bevorzugt 350 bis 600 g/l, auf.

Was das äußere Porenvolumen nach Carbon Black der erfindungsgemäß eingesetzten Hochleistungsadsorbentien anbelangt, so liegt dieses im allgemeinen im Bereich von 0,05 bis 0,5 $cm^3/g$, insbesondere 0,1 bis 0,45 $cm^3/g$. Im allgemeinen bildet das äußere Porenvolumen nach Carbon Black der erfindungsgemäß eingesetzten Hochleistungsadsorbentien höchstens 35 %, vorzugsweise höchstens 30 %, des Gesamtporenvolumens, insbesondere 10 % bis 35 %. bevorzugt 14 bis 30 %, des Gesamtporenvolumens.

Was die äußere Porenoberfläche nach Carbon Black der erfindungsgemäß eingesetzten Hochleistungsadsorbentien anbelangt, so liegt diese im allgemeinen im Bereich von 50 bis 300 $m^2/g$, insbesondere 60 bis 250 $m^2/g$, bevorzugt 70 bis 200 $m^2/g$. Im allgemeinen bildet die äußere Porenoberfläche nach Carbon Black der erfindungsgemäß eingesetzten Hochleistungsadsorbentien höchstens 15 %, vorzugsweise höchstens 10 %, der Gesamtporenoberfläche, insbesondere 4 % bis 15 %, bevorzugt 4 bis 12 %, der Gesamtporenoberfläche.

Was die Herstellung der erfindungsgemäß eingesetzten Hochleistungsadsorbentien anbelangt, so sind diese durch Carbonisierung und nachfolgende Aktivierung von gelförmigen sulfonierten Styrol/Divinylbenzol-Copolymeren, insbesondere sulfonierten divinylbenzolvernetzten Polystyrolen, in Kornform, bevorzugt in Kugelform, erhältlich. Der Divinylbenzolgehalt der als Ausgangsmaterialien zur Herstellung der erfindungsgemäß eingesetzten Hochleistungsadsorbentien verwendeten sulfonierten Styrol/Divinylbenzol-Copolymeren sollte insbesondere im Bereich von 1 bis 15 Gew.-%, vorzugsweise 2 bis 10 Gew.-%, bezogen auf die Styrol/Divinylbenzol-Copolymere, liegen. Die Ausgangscopolymere müssen vom Geltyp ausgewählt sein, damit sich eine mikroporöse Struktur ausbilden kann. Wenn von unsulfonierten Ausgangsmaterialien ausgegangen wird, kann die Sulfonierung in situ durchgeführt werden, insbesondere mit dem Fachmann an sich bekannten Methoden, vorzugsweise mittels Schwefelsäure und/oder Oleum. Dies ist dem Fachmann an sich geläufig. Als Ausgangsmaterialien besonders bewährt haben sich gelförmigen Typen von den entsprechenden Ionenaustauscherharzen bzw. den entsprechenden Vorstufen von Ionenaustauscherharzen, welche noch sulfoniert werden müssen. Bei der Carbonisierung (synonym auch als Pyrolyse, Abbrand oder Schwelung bezeichnet) erfolgt die Umwandlung der kohlenstoffhaltigen Ausgangspolymere zu Kohlenstoff, d. h. mit anderen Worten wird das kohlenstoffhaltige Ausgangsmaterial verkohlt. Bei der Carbonisierung der zuvor genannten, gelförmigen organischen Polymerkörnern, insbesondere Polymerkügelchen, auf Basis von Styrol und Divinylbenzol, die Sulfonsäuregruppen enthalten, führt die Abspaltung der Sulfonsäuregruppen während der Carbonisierung zu freien Radikalen und somit zu Vernetzungen, ohne die es keinen Pyrolyserückstand (= Kohlenstoff) gäbe. Im allgemeinen wird die Carbonisierung unter inerter Atmosphäre (z. B. Stickstoff) oder allenfalls leicht oxidierender Atmosphäre durchgeführt. Gleichermaßen kann es vorteilhaft sein, während der Carbonisierung, insbesondere bei höheren Temperaturen (z. B. im Bereich von etwa 500 bis 650 °C), zu der Inertatmosphäre eine kleinere Menge an Sauerstoff, insbesondere in Form von Luft (z. B. 1 bis 5 %), zuzugeben, um eine Oxidation des carbonisierten Polymerskeletts zu bewirken und auf diese Weise die nachfolgende Aktivierung zu erleichtern. Im allgemeinen wird die Carbonisierung bei Temperaturen von 100 bis 950 °C, insbesondere 150 bis 900 °C, vorzugsweise 300 bis 850 °C, durchgeführt. Die Gesamtdauer der Carbonisierung liegt dabei etwa bei 30 Minuten bis 6 Stunden. Im Anschluß an die Carbonisierung wird das carbonisierte Zwischenprodukt einer Aktivierung unterzogen, am Ende derer die erfindungsgemäß eingesetzten Hochleistungsadsorbentien auf Basis von Aktivkohle in Kornform, insbesondere Kugelform, resultieren. Das Grundprinzip der Aktivierung besteht darin, einen Teil des bei der Carbonisierung generierten Kohlenstoffs selektiv und gezielt unter geeigneten Bedingungen abzubauen. Hierdurch entstehen zahlreiche Poren, Spalten und Risse, und die auf die Masseneinheit bezogene Oberfläche nimmt erheblich zu. Bei der Aktivierung wird also ein gezielter Abbrand der Kohle vorgenommen. Da bei der Aktivierung Kohlenstoff abgebaut wird, tritt bei diesem Vorgang ein Substanzverlust ein, welcher - unter optimalen Bedingungen - gleichbedeutend mit einer Erhöhung der Porosität und Zunahme der inneren Oberfläche und des Porenvolumens ist. Die Aktivierung erfolgt daher unter selektiven bzw. kontrollierten oxidierenden Bedingungen. Die Aktivierung wird im allgemeinen bei Temperaturen von 700 bis 1.300 °C, insbesondere 800 bis 1.200 °C, vorzugsweise 900 bis 1.100 °C, durchgeführt.

Die Besonderheit bei der Herstellung der erfindungsgemäß eingesetzten Hochleistungsadsorbentien ist - neben der Auswahl des zuvor beschriebenen Ausgangsmaterials - in der speziellen Verfahrensführung der Aktivierung zu sehen, insbesondere in der Dauer der Aktivierung in Kombination mit der ausgewählten Aktivierungsatmosphäre. Überraschend ist, daß - wenn man die Aktivierung extrem lange betreibt, insbesondere 12 bis 30 Stunden lang, vorzugsweise 19 bis 23 Stunden lang, und dabei eine nur schwach oxidierende Atmosphäre, welche nur geringe Mengen an Wasserdampf in einer ansonsten stickstoffhaltigen Atmosphäre enthält, verwendet, und zwar in Mengen von nur etwa 0,1 bis 5 Vol.-%, insbesondere 0,5 bis 4 Vol.-%, Wasserdampf - ausgehend von den ausgewählten Ausgangsmaterialien die erfindungsgemäß eingesetzten Hochleistungsadsorbentien hoher Mikroporosität und hoher mechanischer Stabilität mit den übrigen zuvor geschilderten Eigenschaften resultieren. Insbesondere ist überraschend, daß zum einen die extrem lange Aktivierungsdauer nicht zu einem schädlichen, übermäßigen Abbrand unter erheblichem Substanzverlust führt und zum anderen trotz der hohen Porosität bei gleichzeitig hoher Mikroporosität eine extrem hohe Abriebfestigkeit und mechanische Druckfestigkeit resultiert. Es war nicht zu erwarten, daß derart lange Aktivierungsdauern nicht zu einem nachteiligen Ergebnis führen würden und daß bei derart langen Aktivierungsdauern überwiegend selektiv die Mikroporosität bzw. das Mikroporenvolumen generiert wird, sofern von den gelförmigen Ausgangsmaterialien, wie zuvor definiert, ausgegangen wird. Durch Variation der Aktivierungsdauern, insbesondere im Bereich von 12 bis 30 Stunden, vorzugsweise 19 bis 23 Stunden, kann dann gezielt die Mikroporosität eingestellt werden. Auf diese Weise können die erfindungsgemäß eingesetzten Hochleistungsadsorbentien sozusagen maßgeschneidert werden.

Beispielsweise können erfindungsgemäß einsetzbare Hochleistungsadsorbentien jeweils wie folgt hergestellt werden: Handelsübliche Ionenaustauschervorstufen vom Geltyp auf der Basis von divinylbenzolvernetzten Polystyrolcopolymeren mit einem Divinylbenzolgehalt von etwa 4 % werden zunächst vorgetrocknet, um den etwa 50%igen Wasseranteil zu entfernen, und nachfolgend bei Temperaturen von 100 °C bis 150 °C mit einer Schwefelsäure/Oleum-Mischung in an sich bekannter Weise sulfoniert. Dann wird in an sich bekannter Weise bei Temperaturen bis zu 950 °C vier Stunden lang unter Stickstoffatmosphäre carbonisiert und anschließend die Aktivierung eingeleitet, indem der Stickstoffatmosphäre geringe Mengen an Wasserdampf (ca. 1 bis 3 Vol.-%) zugesetzt werden; die Wasserdampfzufuhr wird beibehalten, um den Wasserdampfanteil in dieser Weise zu regulieren. Die Aktivierung wird 19 Stunden lang ("Aktivkohle I") bzw. 23 Stunden lang ("Aktivkohle II") betrieben. Nach Abkühlung auf Raumtemperatur werden erfindungsgemäß einsetzbare Sorbentien erhalten. Die Parameter der entsprechend hergestellten Aktivkohlen ("Aktivkohle I" bzw. "Aktivkohle II") sind in der Tabelle 1 dargestellt.

Für weitergehende Einzelheiten zu den erfindungsgemäß einsetzbaren Hochleistungsadsorbentien kann vollinhaltlich auf die deutsche Patentanmeldung 10 2006 048 790.7 sowie die parallele deutsche Gebrauchsmusteranmeldung 20 2006 016 898.2 verwiesen werden.

Tabelle 1: Vergleich physikochemischer Parameter von zwei erfindungsgemäß einsetzbaren Hochleistungsadsorbentien auf der Basis kugelförmiger Aktivkohle einerseits und handelsüblicher mikroporöser Aktivkohle in Kugelform der Fa. Kureha andererseits

| | Aktivkohle I | Aktivkohle II | Handelsübliche Aktivkohle der Fa. Kureha |
|---|---|---|---|
| Gesamtporenvolumen (Gurvich) ($p/p_0 = 0,995$) [$cm^3/g$] ** | 0,7336 | 1,3550 | 0,5891 |
| Mittlerer Porendurchmesser [Å] | 18,57 | 24,67 | 17,89 |
| BET (Multipoint, MP) ($p/p_0 = 0,05-0,1$) (ASTM B6556-04) [$m^2/g$] ** | 1.580 | 2.197 | 1.317 |
| Mikroporenvolumen (Carbon Black) [$cm^3/g$]* | 0,6276 | 0,9673 | 0,5240 |
| Anteil der Mikroporen am Gesamtporenvolumen [%]* | 85,55 | 71,39 | 88,95 |
| Adsorbiertes Volumen $N_2$ ($p/p_0 = 0,25$) gewichtsbezogen [$cm^3/g$]** | 423 | 650 | 349 |
| Adsorbiertes Volumen $N_2$ ($p/p_0 = 0,25$) volumenbezogen [$cm^3/cm^3$] ** | 236 | 235 | 206 |
| Adsorbiertes Volumen $N_2$ ($p/p_0 = 0,995$) gewichtsbezogen [$cm^3/g$] ** | 473 | 770 | 380 |
| Adsorbiertes Volumen $N_2$ ($p/p_0 = 0,995$) volumenbezogen [$cm^3/cm^3$]** | 264 | 279 | 224 |
| Mikroporenoberfläche (Carbon Black) [$cm^2/g$] * | 1.509 | 1.995 | 1.271 |
| Äußeres Porenvolumen (Carbon Black) [$cm^3/g$] | 0,11 | 0,39 | 0.07 |
| Anteil äußeres Porenvolumen in bezug auf Gesamtporenvolumen [%] | 14,4 | 28,6 | 11,1 |
| Äußere Porenoberfläche | | | |

(fortgesetzt)

| | Aktivkohle I | Aktivkohle II | Handelsübliche Aktivkohle der Fa. Kureha |
|---|---|---|---|
| (Carbon Black) [cm²/g] | 71 | 202 | 46 |
| Anteil der äußeren Porenoberfläche bezogen auf BEToberfläche (MP) [%] | 4.5 | 9,2 | 3,5 |
| Adsorbat | $N_2$ | $N_2$ | $N_2$ |
| Butanadsorption (ASTM D542-95/00) [%] | 33,5 | 59.6 | 29,2 |
| Iodzahl (ASTM D4607-94/99) [mg/g] | 1.470 | 1.840 | 1.343 |
| Druck- bzw. Berstfestigkeit (Gewichtsbelastbarkeit) [kg/Aktivkohlekügelchen] | 3,75 | 1,4 | 0,45 |
| Mittlerer Durchmesser (ASTM D2862-97/04) [mm] | 0,52 | 0,44 | 0,44 |
| Aschegehalt (ASTM D2866-94/04) [%] | 0,50 | 0,45 | 0,04 |
| Feuchtigkeitsgehalt (ASTM D2867-04/04) [%] | 0,04 | 0.1 | 0,37 |
| * Mikroporen: Poren mit Porendurchmessern ≤ 20 Å ** p/p$_0$ = Partialdruck oder Partialdruckbereich | | | |

Wie die Anmelderinnen überraschend und unerwartet gefunden haben, liefern die vorgenannten Sorbentien auf Grundlage der zuvor beschriebenen mikroporösen aktivkohlebasierten Hochleistungsadsorbentien im Rahmen der vorliegenden Erfindung, insbesondere bei der Verwendung im erfindungsgemäßen Speicherbehälter, bei der Anwendung in bezug auf gasförmige Kraftstoffe, insbesondere Wasserstoff, die besten Werte im Hinblick auf eine Speicherung der gasförmigen Kraftstoffe, insbesondere Wasserstoff, im Vergleich zu handelsüblicher mikroporöser Aktivkohle sowie Aktivkohle geringerer Mikroporosität. So lassen sich bei 20 bar und 77 K mit den erfindungsgemäß eingesetzten, aktivkohlebasierten mikroporösen Hochleistungsadsorbentien der zuvor beschriebenen Art mindestens 30 g Wasserstoff pro kg Aktivkohle, insbesondere mindestens 35 g Wasserstoff pro kg Aktivkohle, vorzugsweise mindestens 40 g Wasserstoff pro kg Aktivkohle, besonders bevorzugt mindestens 70 g Wasserstoff pro kg Aktivkohle, rein adsorptiv speichern; hinzu kommt noch nichtadsorptive Speicherkapazität, insbesondere infolge von Speicherung von gasförmigem Wasserstoff in Zwischenräume, Hohlräume, Kavitäten, Makro- und Mesoporen oder dergleichen, welche - zusätzlich zu der adsorptiven Speicherkapazität- mindestens 5 g Wasserstoff pro kg Aktivkohle, insbesondere mindestens 10 g Wasserstoff pro kg Aktivkohle, vorzugsweise mindestens 15 g Wasserstoff pro kg Aktivkohle, besonders bevorzugt mindestens 30 g Wasserstoff pro kg Aktivkohle, beträgt, so daß eine Gesamtspeicherkapazität in bezug auf Wasserstoff bei 20 bar und 77 K für die erfindungsgemäß eingesetzten, aktivkohlebasierten mikroporösen Hochleistungsadsorbentien der zuvor beschriebenen Art von mindestens 35 g Wasserstoff pro kg Aktivkohle, insbesondere mindestens 40 g Wasserstoff pro kg Aktivkohle, vorzugsweise mindestens 45 g Wasserstoff pro kg Aktivkohle, besonders bevorzugt mindestens 50 g Wasserstoff pro kg Aktivkohle, ganz besonders bevorzugt mindestens 55 g Wasserstoff pro kg Aktivkohle, noch mehr bevorzugt mindestens 100 g Wasserstoff pro kg Aktivkohle, resultiert (Durch Einstellung von Druck und/oder Temperatur lassen sich die diesbezüglichen Speichermengen gezielt steuern.). Wie die Untersuchungen der Anmelderinnen ergeben haben, liegen im Vergleich hierzu die analogen Speicherkapazitäten von handelsüblicher mikroporöser Aktivkohle sowie von Aktivkohle geringerer Mikroporosität (Mikroporenvolumenanteil < 70 %), insbesondere von meso- und/oder makroporöser Aktivkohle, um mindestens 20 % bis 30 % unterhalb der vorgenannten Werte. Wie die Anmelderinnen überraschend herausgefunden haben, wird eine optimale Speicherkapazität somit nur mit den zuvor beschriebenen mikroporösen aktivkohlebasierten Hochleistungsadsorbentien erreicht.

Erfindungsgemäß wird auch ein Tanksystem, insbesondere mobiles Tanksystem, bereitgestellt, welches zum Bereitstellen eines gasförmigen Kraftstoffs für ein Antriebsaggregat ausgebildet ist. Das Tanksystem ist dadurch gekennzeichnet, daß es wenigstens einen wie vorstehend beschriebenen Speicherbehälter aufweist. Deshalb wird zunächst auf die vorstehenden Ausführungen zum Speicherbehälter vollinhaltlich Bezug genommen und verwiesen.

Vorteilhaft kann der Speicherbehälter über eine Führung, vorzugsweise die Transportführung und/oder die Gasführung, mit einer Wärmetauschereinrichtung verbunden sein.

Auch kann das Tanksystem wenigstens eine Schnittstelle zur Übertragung von von wenigstens einem Sensorelement zur Messung betriebsspezifischer Eigenschaften des Speicherbehälters und/oder des Sorptionsmaterials und/oder des Sorbens erfaßten Werten, vorteilhaft eine Datenschnittstelle, aufweisen.

Der Aufbau und die Funktionsweise des Tanksystems werden nachfolgend anhand eines Beispiels näher erläutert, bei dem das gespeicherte Gas Wasserstoff ist. Natürlich gilt das nachfolgend Gesagte auch für andere Gasarten.

Zur Entnahme von Wasserstoff aus dem mobilen Tanksystem gibt es mehrere Optionen. Die Menge an im mobilen Tanksystem gespeicherten Wasserstoff setzt sich aus der adsorbierten Phase ($H_{ads}$), also dem am Sorbens adsorbierten Wasserstoff, sowie der Gasphase ($H_{gas}$), also des im freien Volumen des Tanks vorliegendem Wasserstoffgas zusammen. Für jeden beliebigen Zustand (Temperatur und Druck) stellt sich ein von den Adsorptionseigenschaften des Sorptionsmaterials abhängiger Gleichgewichtszustand ein. Direkt nach dem Betanken, etwa eines Fahrzeugs (Druck im Tanksystem 40 bar; Temperatur 77 K), kann von der Antriebseinheit des Fahrzeuges benötigter Wasserstoff direkt aus der Gasphase entnommen werden. Dieser Wasserstoff steht praktisch sofort, in einer durch den im Tanksystem vorherrschenden Druck bestimmbaren Menge zur Verfügung. Durch die Entnahme von Wasserstoff aus der Gasphase wird das sich im Tank befindliche Gleichgewicht zwischen adsorbierter Phase und Gasphase gestört. Bei fallendem Druck wird nun ein Teil des adsorbierten Wasserstoffs desorbiert, um den Verlust in der Gasphase teilweise auszugleichen. Die durch die Desorption verursachte Absenkung der Temperatur bremst jedoch wiederum den Desorptionsvorgang. Bei kurzer Entnahme von Wasserstoff aus der Gasphase des mobilen Tanksystems senkt sich beispielsweise der Druck von 40 bar auf 38 bar ab, wobei die Temperatur wegen des zu vernachlässigenden Wärmestroms von der Umgebung durch die Isolierung beispielsweise von 77 K auf 65 K fällt (Die Größe der Absenkung ist letztendlich von den Adsorptionsenthalpien und -eigenschaften des Sorbens abhängig.). Der Wasserstoff wird also ständig aus der Gasphase entzogen, um die Antriebseinheit des Fahrzeugs zu versorgen. Sobald allerdings der Druck im Tanksystem unter den vom Abnehmer angeforderten Druck fällt, kann ein von der Antriebseinheit des Fahrzeugs benötigter Volumenstrom an Wasserstoff nicht mehr aufrechterhalten werden (Beispielsweise Druck 2 bar) (Werte abhängig vom Sorbens und Verbraucher).

Durch eine angeschlossene Förderpumpe (Nachteil: elektrischer Verbraucher!) oder bevorzugt durch gezielte Erhöhung der Temperatur im Tanksystem kann die Versorgung mit Wasserstoff sichergestellt werden.

Dies kann vorteilhaft realisiert werden, indem bereits entnommener, kalter Wasserstoff über einen Wärmetauscher, der bevorzugt die Umgebungswärme nutzt, erwärmt und wieder zurück in das Tanksystem geleitet wird, wo die im Gas gespeicherte Wärmekapazität auf das Sorbens übertragen wird (Rezyklierung). Die Steuerung des Wärmeeintrags kann mittels geeigneter Ventile, beispielsweise mittels zweier am Tanksystem positionierter Magnetventile, erfolgen, die die Leitung unterbrechen, um unerwünschten Wärmeeintrag, beispielsweise bei Nichtnutzung des Fahrzeugs, zu vermeiden. Mittels des vorgestellten Rezyklationssystems kann die Temperatur im Tanksystem ohne Einsatz einer elektrischen Heizung erhöht und somit auch der in der adsorbierten Phase vorliegende Wasserstoff bei Bedarf desorbiert und genutzt werden.

Für weitergehende diesbezügliche Einzelheiten kann auch auf die WO 2005/ 044454 A2 und DE 20 2004 017 036 U1 verwiesen werden.

Darüber hinaus kann erfindungsgemäß ein Befüllungs-/Entladungs-Stutzen zum Befüllen und/oder Entladen eines Speicherbehälters, insbesondere eines wie weiter oben beschriebenen Speicherbehälters, vorgesehen sein, mit einer ersten Führung zum Hindurchführen eines Sorptionsmaterials, insbesondere eines wie weiter oben beschriebenen Sorptionsmaterials, welche mit einer Transportführung eines Speicherbehälters in Verbindung bringbar ist, und mit einer zweiten Führung, insbesondere zum Hindurchführen eines Gases, welche mit einer Gasführung eines Speicherbehälters in Verbindung bringbar ist.

Die Aufgabe der Zu- und Abführung von Sorptionsmaterial und Trägergas übernimmt der Stutzen, der sich dadurch auszeichnet, daß die Länge des Stutzens im Speicherbehälter nachjustiert werden kann, um das Sorptionsmaterial möglichst ortsnah aufwirbeln und abführen zu können. Möglich ist durch die nachjustierbare, räumliche Nähe der Abführung zum Sorptionsmaterial auch die Integration einer Sogwirkung in der Abführung, so daß für die Entleerung des Speicherbehälters nicht unbedingt die Rezirkulation von Gas, beispielsweise Wasserstoff, notwendig ist. Vorteilhaft könnte beispielsweise das oben beschriebene Bernoulli-Prinzip, jedoch außerhalb des Speicherbehälters, genutzt werden, um das Material zu entladen.

Der Stutzen verfügt zunächst über eine Durchführung (Transportführung) für Partikel des Sorptionsmaterials, die durch einen Gasstrom transportiert werden. Die Verbindung weist vorzugsweise einen runden Querschnitt auf, wobei der Durchmesser vorteilhaft einem Vielfachen der zu transportierenden Partikelgröße entspricht.

Weiterhin ist eine zweite Durchführung (Gasführung) für Gas vorgesehen. Diese Durchführung ist nur für den Gastransport vorgesehen und vorteilhaft mittels Filtern gegen das Eindringen von Partikeln des Sorptionsmaterials geschützt.

Alternativ könnten auch beide Durchführungen für den Transport von Sorptionsmaterial geeignet sein. Somit kann beim Befüllen und Entladen des Speicherbehälters immer gekühltes Transportmedium mit einer der beiden Durchführungen, vorzugsweise isolierten Durchführung, transportiert werden. Damit können Verluste vermieden werden, die sich bei der Benutzung einer warmen Durchführung für ein kaltes Medium ergeben (Medium wärmt sich auf/Sorptionsmaterial desorbiert Gas bei Erwärmung).

Beispielsweise kann/können die erste Durchführung und/oder die zweite Durchführung thermisch isoliert sein. Dadurch kann ein Wärmeeintrag in die kalten Gase und das kalte Sorptionsmaterial (vorzugsweise 77 K) verhindert werden.

Bevorzugt können die erste Führung und die zweite Führung beabstandet nebeneinander angeordnet sein. In weiterer Ausgestaltung können die erste Führung und die zweite Führung konzentrisch umeinander angeordnet sein. Damit sind die Zuführung und die Abführung konzentrisch zueinander bzw. umeinander angeordnet.

Vorteilhaft kann der Stutzen in seinem Endbereich, welcher in Kontakt mit einem Speicherbehälter bringbar oder in diesen einführbar ist, zumindest bereichsweise flexibel ausgebildet sein. Dadurch wird die Befüllung und Entladung weiter vereinfacht.

Vorzugsweise kann der Stutzen eine Schnittstelle zum Empfangen von Daten und/oder zum Übertragen von Daten aufweisen. Bevorzugt ist dabei eine insbesondere elektrische Datenverbindung, die einen Informationsaustausch zwischen dem nachfolgend beschriebenen System, beispielsweise einer Tankstelle, und dem Speicherbehälter, beispielsweise in einem Tanksystem eines Fahrzeuges - bzw. dem Fahrzeug selbst - erlaubt. Übertragen werden können beispielsweise Art des Sorptionsmaterials, Beladungszustand, Druck, Temperatur und dergleichen.

Weiterhin wird im Rahmen der Erfindung ein System zum Bereitstellen eines Sorptionsmaterials, insbesondere eines wie weiter oben beschriebenen Sorptionsmaterials, für einen Speicherbehälter bereitgestellt, das dadurch gekennzeichnet ist, daß eine Beschickungsvorrichtung vorgesehen ist, die eine Einrichtung zum Entladen von in einem Speicherbehälter befindlichem verbrauchtem Sorptionsmaterial und eine Einrichtung zum Befüllen eines Speicherbehälters mit unverbrauchtem Sorptionsmaterial aufweist, und daß eine Speichereinrichtung zum Speichern von an einen Speicherbehälter abzugebendem Sorptionsmaterial vorgesehen ist, die zumindest zeitweilig mit der Beschickungsvorrichtung verbunden ist.

Bei einem solchen System handelt es sich erfindungsgemäß um eine Art Tankstelle. An dieser Tankstelle können etwa mobile Tanksysteme, die Bestandteile eines Fahrzeugs sind, betankt werden. Die im Zusammenhang mit dem Stand der Technik beschriebenen Probleme können vermieden werden, wenn das für die Gasspeicherung vorgesehene Sorbens außerhalb des Tanksystems, vorzugsweise an einer Tankstelle mit dem Adsorbat (beispielsweise Wasserstoff) beladen wird. Die dabei entstehende Sorptionswärme kann ohne Zeitdruck und mit niedrigerem Kosten- und Energieaufwand abgeführt werden.

Vorteilhaft kann die Beschickungsvorrichtung des Systems zum Befüllen eines Speicherbehälters mit Sorptionsmaterial bei im Vergleich zum Umgebungsdruck erhöhtem Druck, vorzugsweise bei einem Druck von größer/gleich 40 bar, beispielsweise 40 bar, ausgebildet sein.

Weiterhin kann die Beschickungsvorrichtung des Systems einen wie weiter oben beschriebenen Befüllungs-/Entladungs-Stutzen aufweisen, so daß diesbezüglich auf die entsprechenden Ausführungen vollinhaltlich Bezug genommen und verwiesen wird.

In weiterer Ausgestaltung kann das System wenigstens eine Schnittstelle zum Empfangen von Daten und/oder zum Übertragen von Daten aufweisen, die weiter oben schon erläutert worden ist, besonders bevorzugt eine Datenschnittstelle.

Vorteilhaft kann das System eine Einrichtung zur Kontrolle der Qualität von von einem Speicherbehälter entladenem Sorptionsmaterial aufweisen. Zurückerhaltenes, vollständig entladenes Sorbens oder nur teilweise entladenes Sorptionsmaterial könnte zunächst durch eine Qualitätskontrolle beurteilt und möglicherweise beschädigte oder unbrauchbare Partikel aussortiert werden.

In weiterer Ausgestaltung kann das System eine Einrichtung zum Regenerieren von von einem Speicherbehälter entladenem Sorptionsmaterial aufweisen. Das vollständig entladene Sorbens oder das teilweise entladene Sorptionsmaterial könnte regeneriert (hitzebehandelt/ausgeheizt) werden, um gasförmige Verunreinigungen, zum Beispiel aus Nebenbestandteilen des verwendeten Gases, zu entfernen. Somit ist bei regelmäßiger Regeneration beispielsweise ohne wesentliche Nachteile die Nutzung von Wasserstoff mit geringerer Qualität/Reinheit möglich (zum Beispiel Stoffreinheit Klasse 3.0 statt Klasse 5.0).

Erfindungsgemäß verfügt das System über eine Einrichtung zum Beladen eines Sorbens, insbesondere eines wie weiter oben beschriebenen Sorbens, und/oder eines Sorptionsmaterials, insbesondere eines wie weiter oben beschriebenen Sorptionsmaterials, mit einem Gas, vorzugsweise mit Wasserstoff. Diese Beladungseinrichtung kann verschiedene Komponenten aufweisen.

Beispielsweise kann die Beladungseinrichtung eine Kühleinrichtung zum Abkühlen des Sorbens und/oder des Sorptionsmaterials auf eine vorgegebene Temperatur aufweisen. Das Sorbens bzw. Sorptionsmaterial kann abgekühlt (77 K) und neu mit Wasserstoff beladen und wieder - beispielsweise an einer Zapfsäule - zur Verfügung gestellt werden.

In weiterer Ausgestaltung kann die Beladungseinrichtung eine Einrichtung zum Einstellen eines vorgegebenen Beladungsdrucks aufweisen. Energetisch vorteilhaft ist es, das Sorbens bzw. Sorptionsmaterial in diskreten Prozessen oder kontinuierlich sukzessiv abzukühlen und zu beladen. Eine Staffelung könnte beispielsweise 0 °C/-40 °C/-80 °C/-120 °C/-160 °C/-196 °C sein. Sinnvoll ist gegebenenfalls auch eine Kopplung der Temperaturen an bekannte Phasenübergänge, zum Beispiel $CO_{2fest} \rightarrow CO_{2gas}$ (Sublimation). Auch eine Variation des Beladungsdrucks kann abhängig vom Adsorptionsverhalten der Materialien bei der Energieeinsparung helfen.

Eine andere Möglichkeit besteht darin, zurückerhaltenes, teilweise entladenes Sorptionsmaterial oder vollständig entladenes Sorbens ohne Qualitätskontrolle oder Regeneration abzukühlen und zu beladen, um wieder - beispielsweise an einer Zapfsäule - zur Verfügung gestellt werden zu können. Gegebenenfalls kann über einen im Tanksystem integrierten, auslesbaren und beschreibbaren Chip sichergestellt werden, daß in einem sinnvollen Zyklus (beispielsweise bei jedem fünften Betankungsvorgang) eine Qualitätskontrolle unabhängig vom Beladungszustand vorgenommen wird.

Nachfolgend werden verschiedene Verfahrensaspekte beschrieben, wie ein Sorptionsmaterial bereitgestellt werden kann und wie ein Speicherbehälter mit einem solchen Material befüllt werden kann.

Im Rahmen der vorliegenden Erfindung kann es vorgesehen sein, dass zum Bereitstellen eines Sorptionsmaterials für einen Speicherbehälter, insbesondere mittels eines wie weiter oben beschriebenen Systems, in einem Speicherbehälter befindliches, verbrauchtes Sorptionsmaterial aus dem Speicherbehälter entladen wird, daß das Sorptionsmaterial bzw. Sorbens außerhalb des Speicherbehälters mit einem Gas, insbesondere mit Wasserstoff, erneut beladen wird und daß das beladene Sorptionsmaterial anschließend für einen Speicherbehälter erneut zur Verfügung gestellt wird.

Vorteilhafterweise wird das mit dem Gas beladene Sorptionsmaterial bis zur weiteren Verwendung in einer Speichereinrichtung zwischengespeichert. Diese Speichereinrichtung kann im Falle einer Tankstelle Bestandteil einer entsprechend ausgebildeten Zapfsäule sein oder aber mit dieser zumindest in Verbindung stehen.

Vorzugsweise wird das aus der Speichereinrichtung entladene, verbrauchte Sorptionsmaterial vor der erneuten Beladung mit einem Gas einer Qualitätskontrolle unterzogen. Dies ist im Zusammenhang mit dem erfindungsgemäßen System weiter oben bereits erläutert worden, so daß auf die entsprechenden Ausführungen verwiesen wird.

In weiterer Ausgestaltung kann das aus der Speichereinrichtung entladene verbrauchte Sorptionsmaterial vor der erneuten Beladung mit einem Gas einem Regenerierungsverfahren unterzogen werden. Auch dies ist im Zusammenhang mit dem erfindungsgemäßen System weiter oben bereits erläutert worden, so daß auf die entsprechenden Ausführungen verwiesen wird.

Vorteilhaft kann das Sorptionsmaterial vor der erneuten Beladung mit Gas auf eine vorgegebene Temperatur abgekühlt werden. Dies ist im Zusammenhang mit dem erfindungsgemäßen System weiter oben ebenfalls bereits erläutert worden, so daß auf die entsprechenden Ausführungen verwiesen wird.

Weiterer Gegenstand der vorliegenden Erfindung gemäß einem **zweiten** Aspekt ist somit ein Verfahren zum Befüllen eines Speicherbehälters eines mobilen Tanksystems mit einem Sorptionsmaterial,

**dadurch gekennzeichnet,**

dass in dem Speicherbehälter des mobilen Tanksystems befindliches verbrauchtes Sorptionsmaterial zunächst aus dem Speicherbehälter entladen wird und dass der Speicherbehälter anschließend mit unverbrauchtem Sorptionsmaterial befüllt wird und

dass die Entladung und Befüllung des Speicherbehälters mittels einer Tankstelle zum Bereitstellen eines ein Sorbens und ein hieran adsorbiertes Adsorbat umfassenden Sorptionsmaterials für den Speicherbehälter des mobilen Tanksystems erfolgt, wobei die Tankstelle dadurch gekennzeichnet ist, dass eine Beschickungsvorrichtung vorgesehen wird, die eine Einrichtung zum Entladen von in dem Speicherbehälter des mobilen Tanksystems befindlichem verbrauchtem Sorptionsmaterial

und eine Einrichtung zum Befüllen des Speicherbehälters des mobilen Tanksystems mit unverbrauchtem Sorptionsmaterial aufweist, und dass eine Speichereinrichtung zum Speichern von an einen Speicherbehälter abzugebendem Sorptionsmaterial vorgesehen wird, die zumindest zeitweilig mit der Beschickungsvorrichtung verbunden wird, wobei das Sorbens auf der Grundlage von Hochleistungsadsorbentien auf der Basis von Aktivkohle in Form von diskreten Aktivkohlekörnern, vorzugsweise in Kugelform, ausgebildet ist, wobei mindestens 70 % des Gesamtporenvolumens der Hochleistungsadsorbentien durch Mikroporen mit Porendurchmessern von $\leq 20$ A gebildet sind, und wobei der Speicherbehälter des mobilen Tanksystems einen Druckbehälter, ein Verbindungselement zu der Beschickungsvorrichtung, eine Transportführung zum Beladen und/oder Entladen des Speicherbehälters des mobilen Tanksystems und wenigstens eine zweite Führung zum Zuführen und/oder Abführen eines Gases aufweist.

Bezüglich der Funktionsweise des Verfahrens wird ebenfalls auf die vorstehenden Ausführungen zu dem ersten Erfindungsaspekt vollinhaltlich Bezug genommen und verwiesen.

Ein solcher Befüllungsvorgang, etwa ein Betankungsvorgang, setzt gute Transporteigenschaften und sicheres Handling der Sorptionsmaterialien vom Speicherbehälter des Systems - etwa der Tankstelle - über ein Fördersystem in den mobilen Tank voraus. Dies ist zum Beispiel mit konventionellen Aktivkohlepulvern kaum möglich, da die Partikelgröße des Pulvers stark variiert. Die daraus resultierenden Probleme wären eine Separation der Partikel beim Transport (beispielsweise nur kleine Partikel werden im Gasstrom bis zum mobilen Tank transportiert), teilweise Agglomeration sowie ein starker Verschleiß der verwendeten Armaturen wie Druckminderer, Ventile und Pumpen durch eine Ablagerung von Partikeln unter-schiedlicher Dimensionen. Durch den Einsatz der erfindungsgemäß eingesetzten Sorbentien und Sorptionsmaterialien kann das Befüllungsverfahren deutlich besser realisiert werden.

Vorteilhaft erfolgt die Entladung und Befüllung des Speicherbehälters mittels eines wie weiter oben beschriebenen Systems, so daß auf die entsprechenden Ausführungen vollinhaltlich Bezug genommen und verwiesen wird.

Vorteilhaft kann der Speicherbehälter mit einem Sorptionsmaterial befüllt werden, welches mittels eines wie weiter vorstehend beschriebenen Verfahrens bereitgestellt worden ist, so daß auf die entsprechenden Ausführungen vollinhaltlich Bezug genommen und verwiesen wird.

Vorzugsweise wird vor der Entladung des Speicherbehälters von verbrauchtem Sorptionsmaterial die Restmenge an im Speicherbehälter verbliebenem, am Sorptionsmaterial adsorbiertem Adsorbat und/oder nichtadsorbiertem, gasförmigem Kraftstoff, insbesondere Wasserstoff, ermittelt. Beispielsweise kann eine Bestimmung der Restmenge an gespeichertem Gas, etwa Wasserstoff, durch Druck- und Temperaturmessung des Speichermediums erfolgen.

Die Entladung des Speicherbehälters von verbrauchtem Sorptionsmaterial kann vorteilhaft mittels Einblasen von im Hinblick auf das Sorptionsmaterial eingesetztem Gas bzw. Kraftstoff, insbesondere von Wasserstoff, erfolgen. Die Entladung des im Speicherbehälter befindlichen Sorptionsmaterials bzw. Sorbens erfolgt beispielsweise durch Einblasen von Wasserstoff. Durch die spezielle Form und Position der Gasführung, etwa in Form einer Düse, wird das Sorptionsmaterial oder Sorbens aufgewirbelt und durch den Gasstrom über den Auslaß ausgetragen. Der Druck dieses Entladungskreislaufes muß nicht unbedingt 40 bar betragen, sondern er kann beispielsweise dem Restdruck im Speicherbehälter angepaßt werden, um einer Adsorption oder weiteren Desorption des Sorptionsmaterials während des Entladungsvorganges vorzubeugen.

Vorteilhaft kann der Speicherbehälter zwischen der Entladung und der erneuten Befüllung auf eine vorgegebene Temperatur gebracht, insbesondere gekühlt werden. Nach Entfernung eines vorteilhaften Anteils des Sorptionsmaterials oder Sorbens (beispielsweise etwa 98 %) wird der Speicherbehälter (also der leere Druckbehälter) durch Einblasen von Gas, etwa von kaltem (77 K) Wasserstoff, gekühlt. Dabei wird kaltes (77 K) Gas (Wasserstoffgas) mit angepaßter Strömungsgeschwindigkeit und Volumenstrom von dem Bereitstellungssystem über die für den Gaseinlaß vorgesehene Durchführung in den Speicherbehälter geblasen, wobei durch den Wärmestrom dQ/dt vom Druckbehälter zum kalten Gas (Wasserstoffgas) Wärme abgeleitet wird, welche durch die Abführung des nun aufgewärmten Gases (Wasserstoffgases) durch die dafür vorgesehene Durchführung aus dem Speicherbehälter abtransportiert wird.

Vorzugsweise kann die erneute Befüllung des Speicherbehälters mit unverbrauchtem Sorptionsmaterial bei einem erhöhten Druck von größer/gleich 40 bar erfolgen.

Das unverbrauchte Sorptionsmaterial wird vorteilhaft bei einem im Vergleich zum Umgebungsdruck erhöhten Druck, vorzugsweise bei einem Druck von größer/gleich 40 bar, beispielsweise bei einem Druck von 40 bar, zum Speicherbehälter transportiert und in diesen eingefüllt. Es folgt somit das Einblasen von frischem, beispielsweise mit Wasserstoff, voll beladenem Sorptionsmaterial bei beispielsweise 40 oder 100 bar Druck über die für die Befüllung vorgesehene Durchführung. Dieses Sorptionsmaterial wurde vorteilhaft im Bereitstellungssystem bereits auf 77 K vorgekühlt und bei 40 bar mit Gas (Wasserstoff) beladen. Daher erfolgt ein Transport des Sorptionsmaterials vom Bereitstellungssystem in den Speicherbehälter des Tanksystems ebenfalls bei erhöhtem Druck, etwa bei 40 bar, um eine Desorption des Gases (Wasserstoffs) zu vermeiden. Andernfalls könnten erneute Adsorptionsvorgänge im Speicherbehälter zu einer Erhöhung der Temperatur und folglich zu einer geringeren Standzeit bzw. kleineren (Beladungsdichte und, im Falle eines mobilen Tanksystems in einem Fahrzeug, somit zu einer geringeren Reichweite des Fahrzeuges führen. Denkbar wäre auch eine Beladung am Bereitstellungssystem bei Drücken größer 40 bar, wobei der Druck beim Betanken des Speicherbehälters dann auf 40 bar abgesenkt werden könnte. Folglich würde ein Teil des adsorbierten Gases (Wasserstoffes) vom Sorptionsmaterial desorbieren und die Temperatur im Speicherbehälter unter 77 K absenken. Bei einer geringeren Temperatur im Speicherbehälter könnte bei gleichem Druck (40 bar) eine größere Menge an Gas (Wasserstoff) gespeichert oder die Standzeit des Tanksystems erhöht werden.

Mit der vorliegenden Erfindung kann vorteilhaft eine Rezyklierung des Energieträgergases bei Einsatz von Druckkörpern mit schlechter Wärmeleitfähigkeit (z. B. CFK-Werkstoffe) durch vorgekühlten Wasserstoff erreicht werden. Durch die externe Beladung des Speichermaterials mit Wasserstoff und den dadurch bedingten Wegfall von Wärmetönungen im Speicherbehälter (dQ/dt; dt < 10 min) sind die für den Kälteeintrag benötigten Volumenströme jedoch deutlich geringer und entsprechen in ihrer Größenordnung dann in etwa den benötigten Wärmeströmen (dQ/dt; dt ~ einige Stunden = mehrere hundert Kilometer) für die Desorption, so daß die für den Wärme- und Stofftransport benötigten Apparaturen und Querschnitte deutlich reduziert werden können. Dadurch ergeben sich eine Gewichtsersparnis sowie eine Reduzierung der Komplexität des Speichersystems. Damit sinken die Herstellungskosten bzw. die zu investierenden Kosten und die Betriebsaufwendungen bei gleichzeitig erhöhter Standzeit ("Boif-off-Zeit") aufgrund des geringeren Wärmestroms über die schmaler dimensionierten Rohrverbindungen.

Die Erfindung wird nun anhand von Ausführungsbeispielen unter Bezugnahme auf die beiliegenden Zeichnungen näher erläutert. Es zeigen:

Figuren 1 bis 4     eine erste Ausführungsform eines Speicherbehälters;

Figuren 5 bis 8     eine zweite Ausführungsform eines Speicherbehälters;

Figuren 9 bis 12     eine dritte Ausführungsform eines Speicherbehälters;

Figur 13     in schematischer Ansicht ein Tanksystem, welches mit einem erfindungsgemäßen System zum Bereitstellen eines Sorptionsmaterials zusammenwirkt; und

Figur 14     eine schematische Querschnittsansicht durch einen Befüllungs- /Entladungs-Stutzen.

In den Ausführungsbeispielen wird eine Situation beschrieben, bei denen in einem Speicherbehälter 10 ein Sorptionsmaterial eingefüllt wird, an dem Wasserstoff adsorbiert ist. Der Speicherbehälter ist Bestandteil eines mobilen Tanksystems, welches in einem Fahrzeug eingebaut ist. Der Speicherbehälter wird an einem Bereitstellungssystem befüllt, welches eine Tankstelle darstellt.

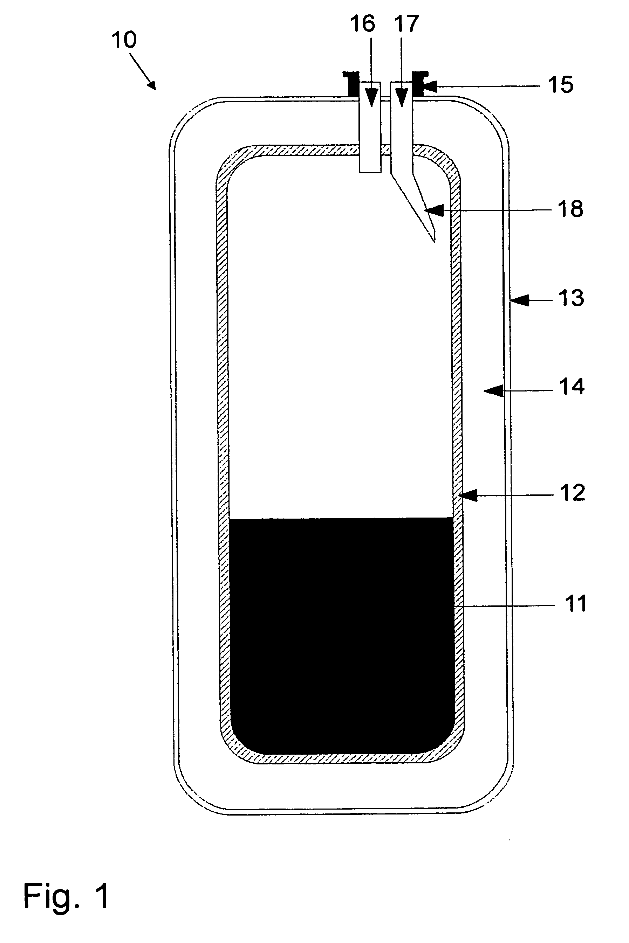

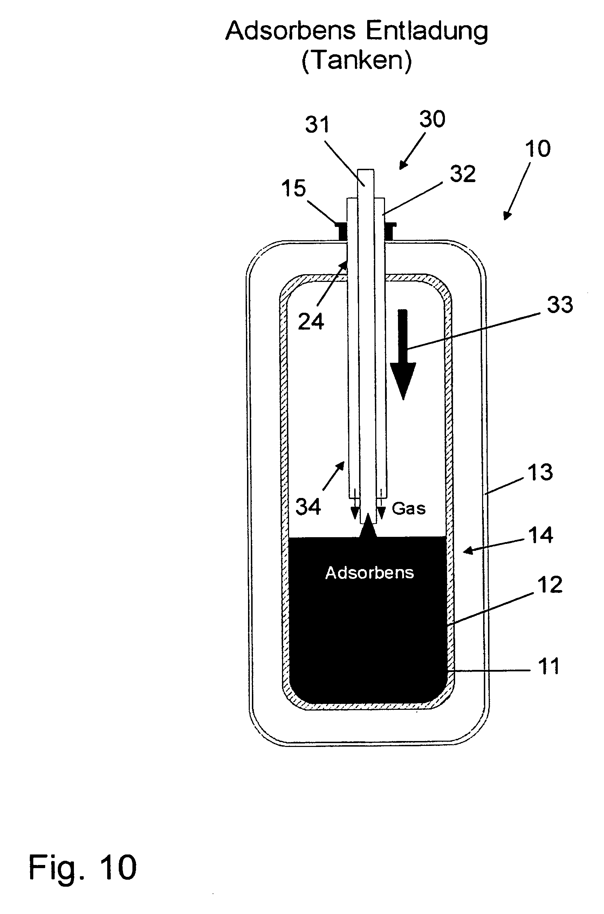

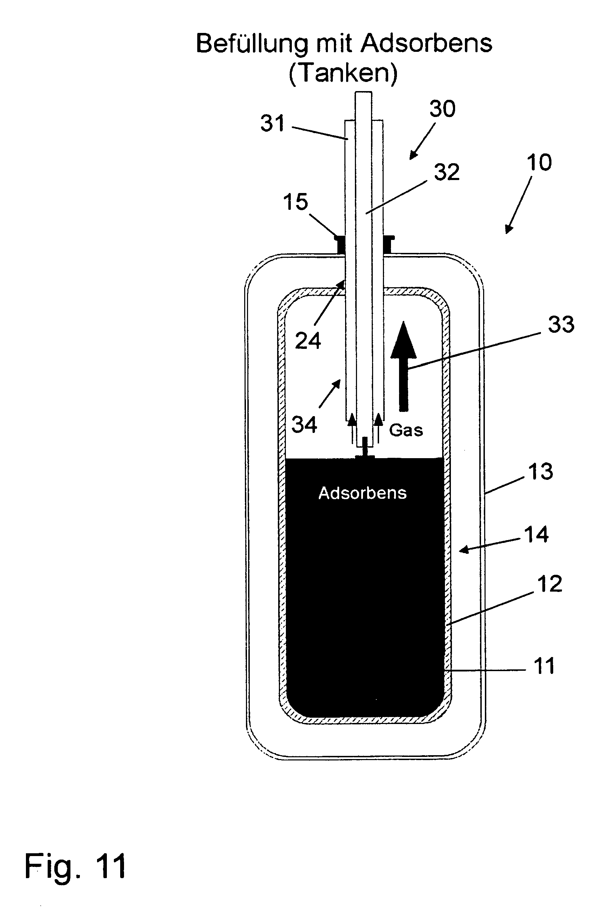

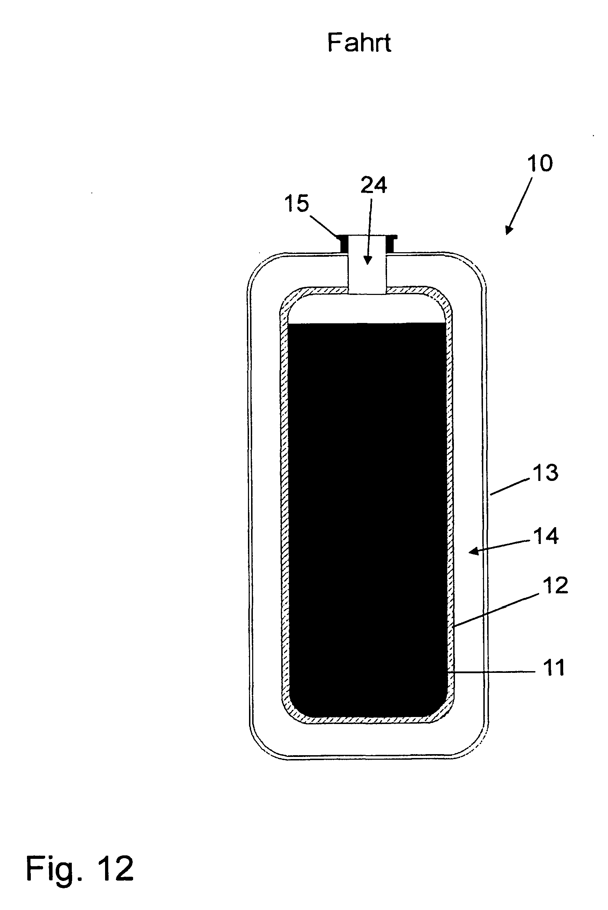

In den Figuren 1 bis 12 sind zunächst verschiedene Ausführungsbeispiele für einen Speicherbehälter 10 dargestellt - ebenso wie deren Befüllungs- und Entladevorgänge.

Der in den Figuren 1 bis 4 dargestellte Speicherbehälter 10 ist in Form eines Druckbehälters ausgebildet. Der Speicherbehälter 10 verfügt zunächst über einen Innenbehälter 12, in dem sich ein Sorptionsmaterial 11 befindet. Das Sorptionsmaterial 11 besteht aus einem Sorbens, an dem Wasserstoff adsorbiert ist. Der Innenbehälter 12 ist von einem Außenbehälter 13 umgeben, wobei zwischen den beiden Behältern 12, 13 ein Isolationsbereich 14 vorgesehen ist. Der Speicherbehälter 10 verfügt weiterhin über ein Verbindungselement 15, beispielsweise einen Flansch, über den er mit einem externen Bereitstellungssystem verbunden werden kann. Darüber hinaus verfügt der Speicherbehälter 10 über eine erste Führung 16, die als Transportführung für das Sorptionsmaterial dient. Zusätzlich ist eine zweite Führung 17 vorgesehen, die als Gasführung dient. Diese Gasführung 17 ist im vorliegenden Beispiel als Düse 18 ausgebildet.

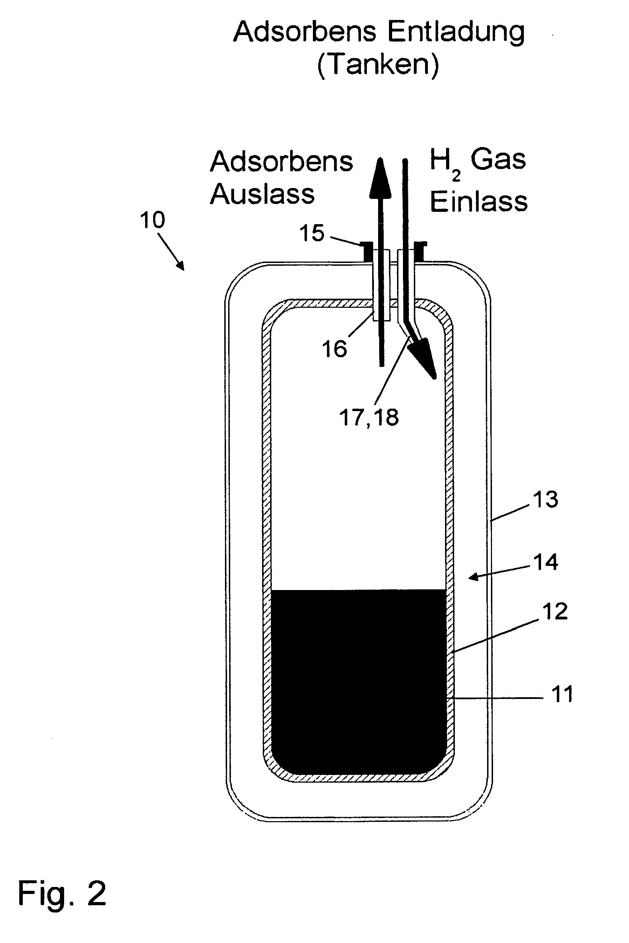

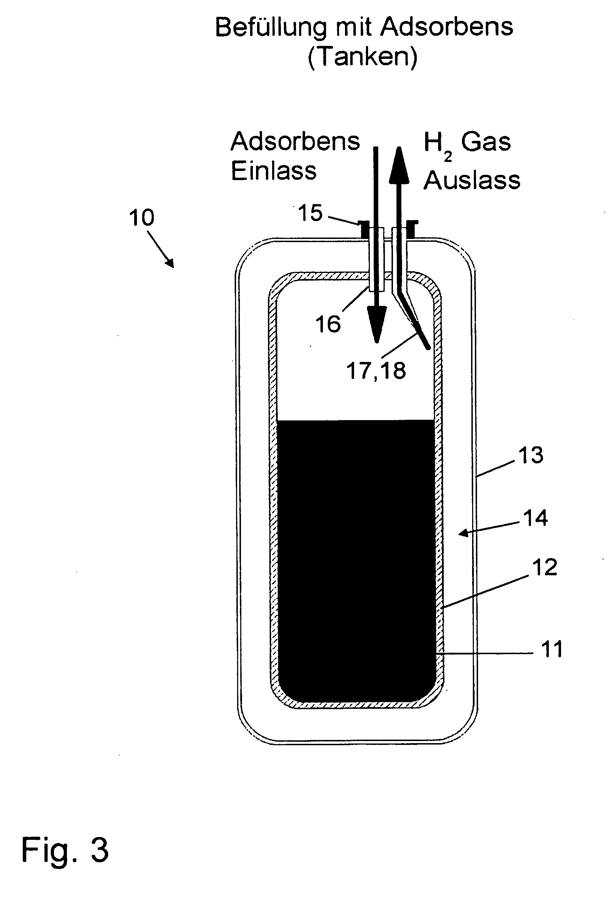

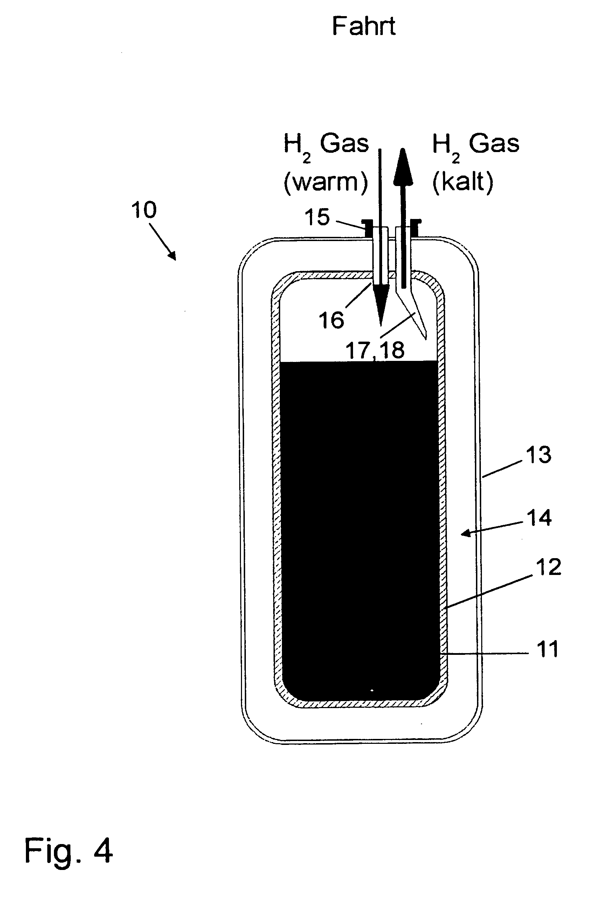

Ziel dieser Ausführungsform ist ein mechanisch möglichst einfaches Befüllungsund Entladesystem, um aufwendige Konstruktionen sowie bewegliche Teile innerhalb des Speicherbehälters 10 zu vermeiden. Der Grundgedanke ist es, das granulatförmige Sorptionsmaterial 11 über einen Gasstrom bei praktisch beliebigem Druck bis zu etwa 40 bar zu transportieren. Das Tanksystem sollte dabei grundsätzlich zwei Öffnungen/Durchführungen aufweisen. Die erste Durchführung 16 (Transportführung) ist mit einem im Verhältnis zur Partikelgröße des Sorptionsmaterials verhältnismäßig großen Durchmesser ausgestattet (beispielsweise Durchmesser gleich 50mal Partikelgröße). Die Durchführung 16 dient zum Transport des Sorptionsmaterial 11 sowohl von der Tankstelle zum Tanksystems sowie auch vom Tanksystem zur Tankstelle. Die zweite Durchführung 17 (Gasführung) ist in Form einer Düse 18 ausgeführt und weist einen Filter auf, der eindringende Sorptionsmaterialpartikel zurückhält. Diese Düse 18 dient bei Befüllung des Tanksystems als Gasauslaß. Bei einer Beladung des Tanksystems (Figur 3) mit frischem Sorptionsmaterial 11 wird dieses über einen Volumenstrom über die erste Durchführung 16 in den Speicherbehälter 10 eingebracht. Das dazu benötigte Wasserstoffträgergas verläßt den Speicherbehälter 10 über die Gasführung 17. Bei einer Entladung (Figur 2) des Tanksystems strömt Wasserstoffgas über die als Düse 18 ausgeführte Durchführung 17 in den Speicherbehälter 10. Durch die hohe Strömungsgeschwindigkeit am Auslaß und der Position der Düse 18 im Speicherbehälter 10 wird im Speicherbehälter 10 vorhandenes Sorptionsmaterial 11 aufgewirbelt und über die Transportführung 16 durch die Gasströmung aus dem Speicherbehälter 10 transportiert. Somit kann das Tanksystem be- und entladen werden. Während der Fahrt (Figur 4) wird desorbierter Wasserstoff über die Gasführung 17 entnommen und dem Antriebsaggregat zugeführt. Um die Desorption optimal zu steuern, kann erwärmter Wasserstoff über die Transportführung 16 in den Speicherbehälter 10 eingebracht werden.

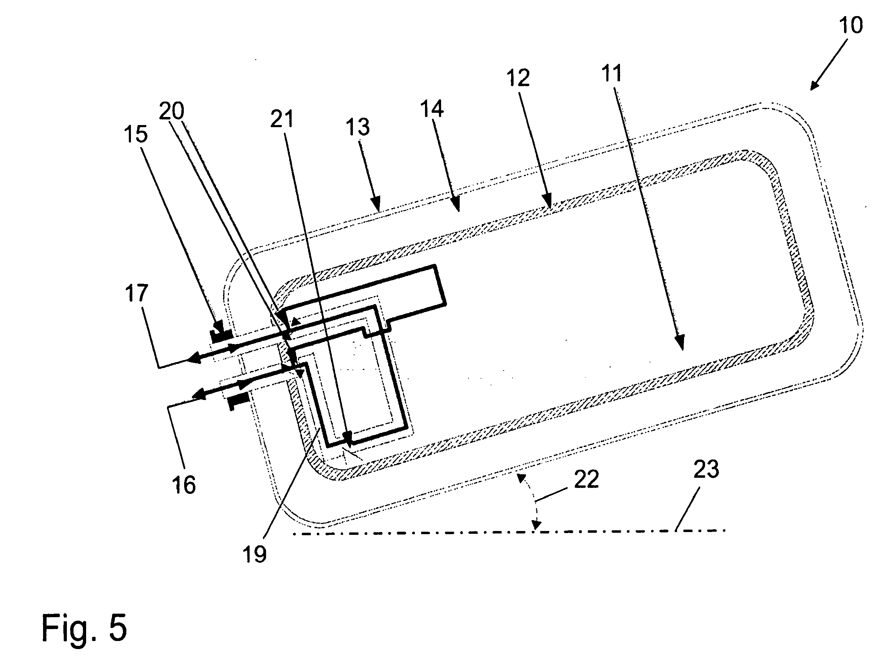

Der in den Figuren 5 bis 8 dargestellte Spelcherbehälter 10 ist ebenfalls In Form eines Druckbehälters ausgebildet. Der Speicherbehälter 10 verfügt wiederum über einen Innenbehälter 12, in dem sich das Sorptionsmaterial 11 befindet. Das Sorptionsmaterial 11 besteht aus einem Sorbens, an dem Wasserstoff adsorbiert ist. Der Innenbehälter 12 ist von einem Außenbehälter 13 umgeben, wobei zwischen den beiden Behältern 12, 13 ein Isolationsbereich 14 vorgesehen ist. Der Speicherbehälter 10 verfügt weiterhin über ein Verbindungselement 15, beispielsweise einen Flansch, über den er mit einem externen Bereitstellungssystem verbunden werden kann. Darüber hinaus verfügt der Speicherbehälter 10 über eine erste Führung 16, die als Transportführung für das Sorptionsmaterial 11 dient. Zusätzlich ist eine zweite Führung 17 vorgesehen, die als Gasführung dient. Im vorliegenden Beispiel sind die beiden Führungen 16, 17 rohrförmig ausgebildet und bilden eine Rohrschleife 19. In der Rohrschleife 19 sind zwei drehbare Klappen 20 angeordnet, um die Strömung innerhalb der Rohrschleife 19 zu beeinflussen.

Die in den Figuren 5 bis 8 dargestellte Ausführungsform des Speicherbehälters 10 macht sich den dynamischen Druckabfall an Stellen mit erhöhter Strömungsgeschwindigkeit gemäß der Bernoulligleichung

$$\frac{1}{2} \, \rho \, v^2 \; + \; \rho \, g \, h \; + \; p \; = \; \text{const.}$$

zunutze (Venturirohr).

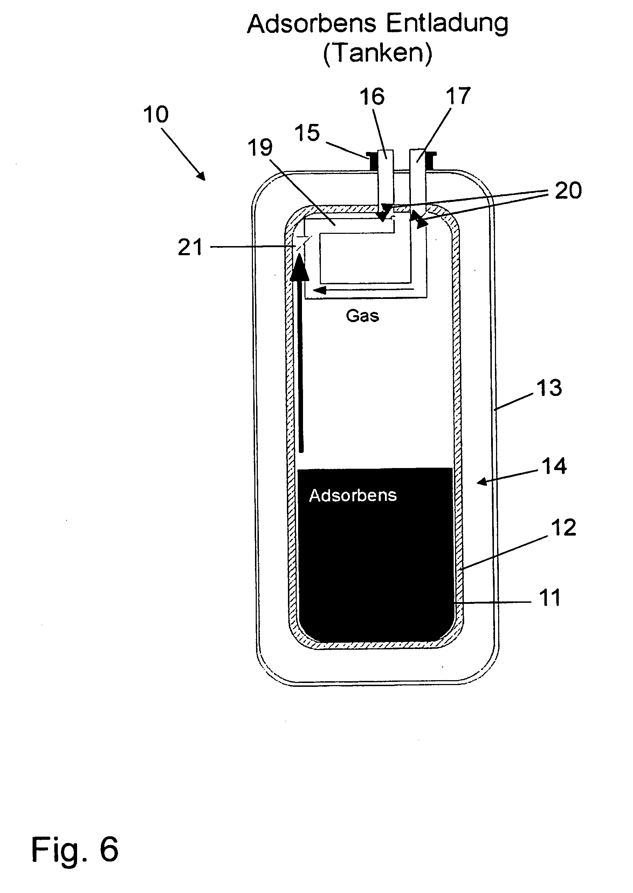

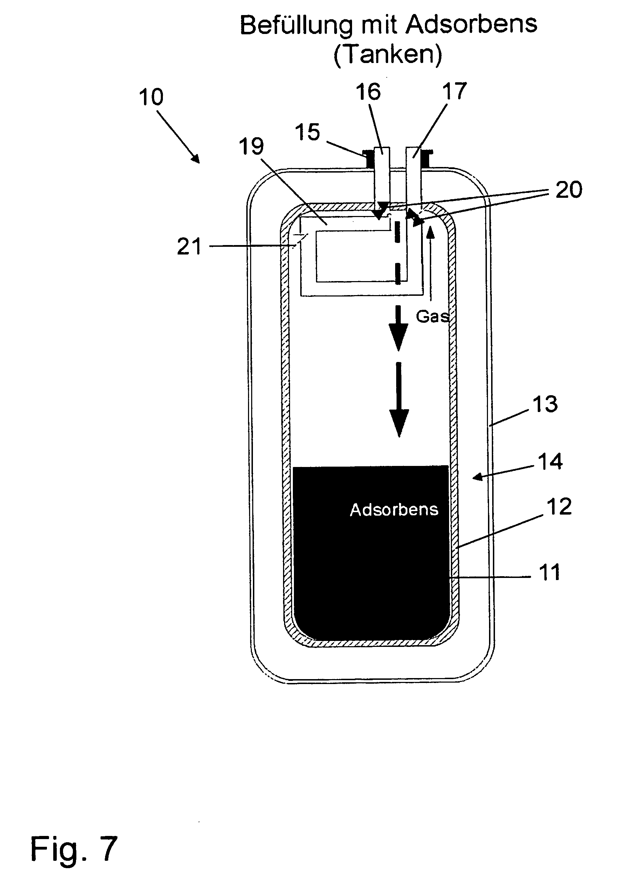

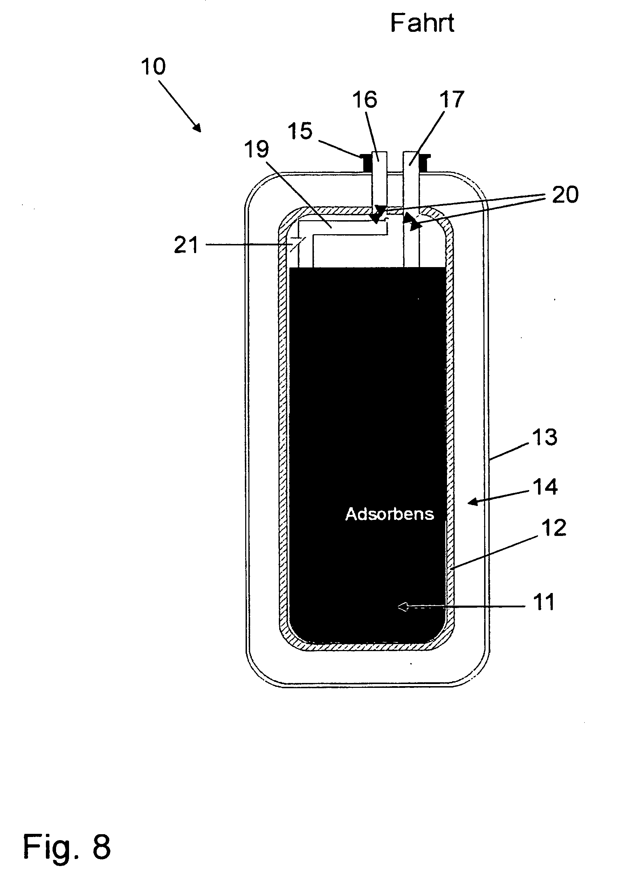

Der Speicherbehälter 10 zeichnet sich durch eine geschlossene Rohrschleife 19 mit möglichst geringem Innenströmungswiderstand aus, die an zwei Stellen von um 90° drehbaren, strömungsangetriebenen Klappen 20 unterbrochen wird. Ziel dieser Klappen 20 ist die Umlenkung des Förderstroms (Sorptionsmaterial + Trägergas) während des Befüllungsvorgangs. Die erste Klappe schließt den Durchlaß durch das Rohrsystem und bedingt dadurch die Einbringung des Sorptionsmaterials 11 in den Speicherbehälter (Figur 7). Das Trägergas wird über die zweite Klappe zurück in das Rohrsystem befördert und kann zur Zapfsäule zurückgeführt werden. Ein Filter vor der Klappe 20 verhindert den Austrag von Sorptionsmaterial 11. Bei der Entleerung des Speicherbehälters 10 (Figur 6) durchströmt das Trägergas die Rohrschleife 19 in entgegengesetzter Richtung. Eine Verengung 21 der Rohrschleife (siehe das oben beschriebene Venturiprinzip) führt zur Verringerung des statischen Drucks im Rohrstück und dadurch zu einem Ansaugen von Sorptionsmaterial 11 aus dem Speicherbehälter 10. Das Sorptionsmaterial 11 wird in den Trägerstrom dispergiert und aus dem Speicherbehälter 10 ausgetragen. Eine leichte Schrägstellung 22 des Speicherbehälters 10 und eine günstige Positionierung des Venturiteilstücks 21 in der Nähe des tiefsten Punkts übernehmen mittels Nutzung der Schwerkraft auf der schiefen Ebene die Aufgabe, das Sorptionsmaterial 11 in die Reichweite der Ansaugung zu transportieren. Dabei liegt die Schrägstellung in Bezug auf eine Referenzebene 23, die im vorliegenden Beispiel als horizontale Ebene ausgebildet ist. Ob es sich bei der Referenzebene um eine horizontale oder vertikale Ebene handelt, hängt von der generellen Ausrichtung des Speicherbehälters 10 ab. Während der Fahrt (Figur 8) wird desorbierter Wasserstoff über die Gasführung 17 aus dem Speicherbehälter 10 entnommen.

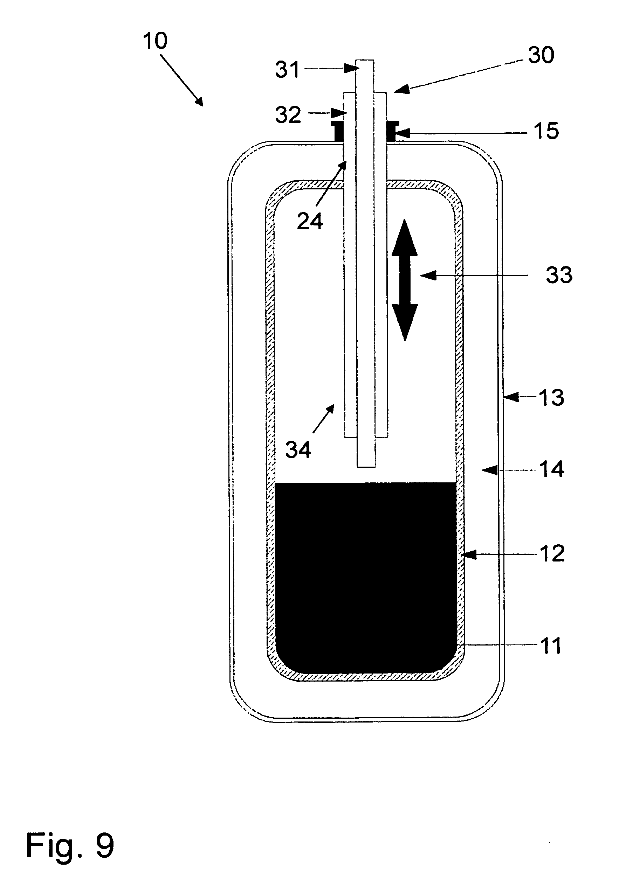

Auch der in den Figuren 9 bis 12 dargestellte Speicherbehälter 10 ist in Form eines Druckbehälters ausgebildet. Der Speicherbehälter 10 verfügt wiederum über einen Innenbehälter 12, in dem sich das Sorptionsmaterial 11 befindet. Das Sorptionsmaterial 11 besteht aus einem Sorbens, an dem Wasserstoff adsorbiert ist. Der Innenbehälter 12 ist von einem Außenbehälter 13 umgeben, wobei zwischen den beiden Behältern 12, 13 ein Isolationsbereich 14 vorgesehen ist. Der Speicherbehälter 10 verfügt weiterhin über ein Verbindungselement 15, beispielsweise einen Flansch, über den er mit einem externen Bereitstellungssystem verbunden werden kann.

Vorteil der in den Figuren 9 bis 12 dargestellten Ausführungsform ist die Entkopplung der für die Befüllung und Entladung benötigten Komponenten vom Speicherbehälter 10 und somit eine wesentliche Ersparnis von Gewicht und Wärmekapazität. Die Aufgabe der Zu- und Abführung von Sorptionsmaterial 11 und Trägergas übernimmt ein durch den Tankstutzen 15 eingeführter Befüllungs-/EntladungsStutzen 30, der in seinem Endbereich 34, welches in den Speicherbehälter 10 hineinragt, auch flexibel gestaltet sein kann und der sich dadurch auszeichnet, daß die Länge des Stutzens 30 im Speicherbehälter 10 nachjustiert werden kann, um das Sorptionsmaterial 11 möglichst ortsnah aufwirbeln und abführen zu können. Diese Nachjustierbarkeit ist in den Figuren 9 bis 12 in Form eines Pfeils 33 dargestellt.

Vorteilhaft ist in diesem Zusammenhang die besondere Eignung dieser Ausführung für eine konzentrische Anordnung von Transportführung 31 und Gasführung 32. Der Speicherbehälter 10 weist dann eine einzige Führung 24 auf, durch die die beiden anderen Führungen 31, 32 des Stutzens 10 hindurchführbar sind. Möglich ist durch die nachjustierbare, räumliche Nähe der Führungen 31, 32 zum Sorptionsmaterial 11 auch die Integration einer Sogwirkung in den Führungen 31, 32, so daß für die Entleerung des Speicherbehälters 10 nicht unbedingt die Rezirkulation von Wasserstoff notwendig ist. Vorteilhaft könnte beispielsweise das im Zusammenhang mit den Figuren 5 bis 8 beschriebene Bernoulli-Prinzip, jedoch außerhalb des Speicherbehälters 10, genutzt werden, um das Material zu entladen.

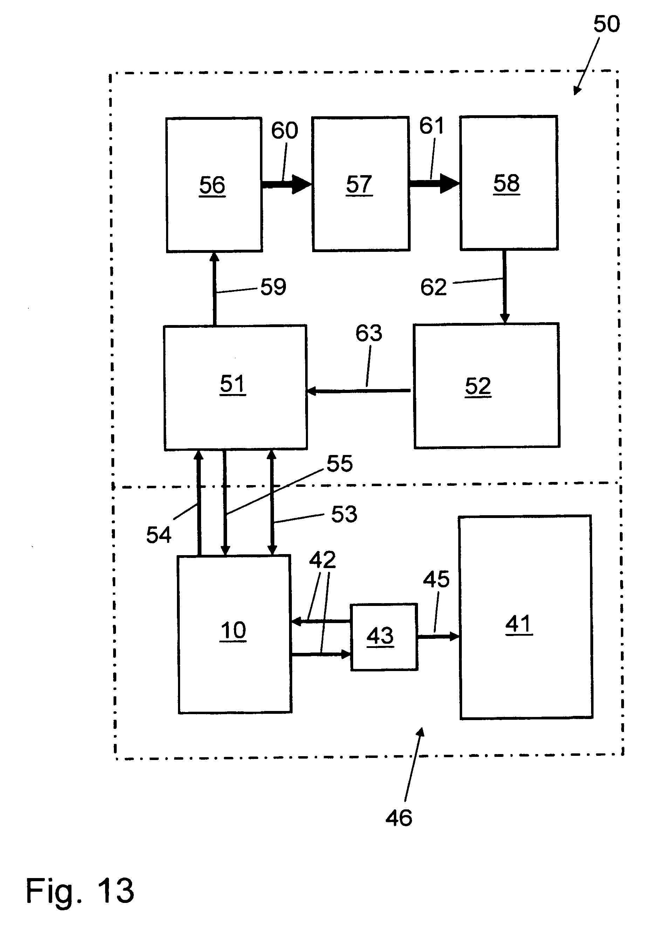

In der Figur 13 ist ein Schema dargestellt, das zunächst ein mobiles Tanksystem 40 zeigt, welches in einem Fahrzeug angeordnet sein soll. Das Tanksystem 40 verfügt zunächst über einen Speicherbehälter 10, der beispielsweise in einer der in den Figuren 1 bis 12 dargestellten Varianten ausgebildet sein kann. Ober entsprechende Führungen 42 ist der Speicherbehälter 10 mit einer Wärmetauschereinrichtung 43 verbunden, welche über eine Leitung 45 wiederum mit einem Antriebsaggregat 41 des Fahrzeugs verbunden ist.

Zur Entnahme von Wasserstoff aus dem mobilen Tanksystem 40 gibt es mehrere Optionen. Die Menge an im Speicherbehälter 10 gespeicherten Wasserstoffs setzt sich aus der adsorbierten Phase ($H_{ads}$), also dem am Sorbens adsorbierten Wasserstoff, sowie der Gasphase ($H_{gas}$), also des im freien Volumen des Tanks 10 vorliegenden Wasserstoffgases, zusammen. Für jeden beliebigen Zustand (Temperatur und Druck) stellt sich ein von den Adsorptionseigenschaften des Sorbens abhängiger Gleichgewichtszustand ein. Direkt nach dem Betanken des Fahrzeugs (Druck im Tanksystem 40 bar; Temperatur 77 K), kann von der Antriebseinheit 41 des Fahrzeuges benötigter Wasserstoff direkt aus der Gasphase entnommen werden. Dieser Wasserstoff steht praktisch sofort in einer durch den im Speicherbehälter 10 vorherrschenden Druck bestimmbaren Menge zur Verfügung. Durch die Entnahme von Wasserstoff aus der Gasphase wird das sich im Tank 10 befindliche Gleichgewicht zwischen adsorbierter Phase und Gasphase gestört. Bei fallendem Druck wird nun ein Teil des adsorbierten Wasserstoffs desorbiert, um den Verlust in der Gasphase teilweise auszugleichen. Die durch die Desorption verursachte Absenkung der Temperatur bremst jedoch wiederum den Desorptionsvorgang. Bei kurzer Entnahme von Wasserstoff aus der Gasphase des Speicherbehälters 10 senkt sich beispielsweise der Druck von 40 bar auf 38 bar ab, wobei die Temperatur wegen des zu vernachlässigenden Wärmestroms von der Umgebung durch die Isolierung beispielsweise von 77 K auf 65 K fällt (Die Größe der Absenkung ist letztendlich von den Adsorptionsenthalpien und -eigenschaften des Sorbens abhängig.). Der Wasserstoff wird also ständig aus der Gasphase entzogen, um die Antriebseinheit 41 des Fahrzeugs zu versorgen. Sobald allerdings der Druck im Speicherbehälter 10 unter den vom Abnehmer angeforderten Druck fällt, kann ein von der Antriebseinheit 41 des Fahrzeugs benötigter Volumenstrom an Wasserstoff nicht mehr aufrechterhalten werden (beispielsweise Druck 2 bar). Die entsprechenden Werte sind allerdings abhängig vom jeweils verwendeten Sorbens.

Durch eine angeschlossene Förderpumpe (Nachteil: elektrischer Verbraucher!) oder bevorzugt durch gezielte Erhöhung der Temperatur im Speicherbehälter 10 kann die Versorgung mit Wasserstoff sichergestellt werden. Dies kann vorteilhaft realisiert werden, indem bereits entnommener, kalter Wasserstoff über einen Wärmetauscher 43, der bevorzugt die Umgebungswärme nutzt, erwärmt und wieder zurück in den Speicherbehälter 10 geleitet wird, wo die im Gas gespeicherte Wärmekapazität auf das Sorptionsmaterial übertragen wird (Rezyklierung). Die Steuerung des Wärmeeintrags kann beispielsweise mittels zweier am Speicherbehälter 10 positionierter Magnetventile erfolgen, die die Leitung unterbrechen, um einen unerwünschten Wärmeeintrag zum Beispiel bei Nichtnutzung des Fahrzeugs zu vermeiden. Mittels des vorgestellten Rezyklationssystems kann die Temperatur im Tanksystem 40 ohne Einsatz einer elektrischen Heizung erhöht, und somit auch der in der adsorbierten Phase vorliegende Wasserstoff bei Bedarf desorbiert und genutzt werden.

Der Speicherbehälter 10 kann über ein System 50 zum Bereitstellen eines Sorptionsmaterials 11, im vorliegenden Fall einer Tankstelle, mit Sorptionsmaterial 11 versorgt werden. Dazu kann der Speicherbehälter 10 während des Befüllungsvorgangs und Entladevorgangs mit einer Beschickungseinrichtung 51 verbunden werden, was durch die Pfeile 54 und 55 dargestellt ist. Bei der Beschickungsvorrichtung kann es sich um eine Art Zapfsäule des Tankstellensystems 50 handeln. Ferner kann zwischen dem mobilen Tanksystem 40 und dem Bereitstellungssystem 50 eine Datenleitung 53 in Form geeigneter Schnittstellen vorhanden sein, über die insbesondere Meßwerte ausgetauscht werden können, die den Befüllungsvorgang und Entladevorgang vorteilhaft unterstützen können. Die Beschickungsvorrichtung 51 ist über eine Verbindungsleitung 63 mit einer Speichereinrichtung 52 verbunden, in der bereits beladenes Sorptionsmaterial zwischengelagert wird.

Das über die Beschickungsvorrichtung 41 entladene Sorptionsmaterial kann beispielsweise über eine Einrichtung 56 zur Qualitätskontrolle und eine Einrichtung 57 zur Regeneration einer Einrichtung 58 zum Beladen eines Sorbens und/oder Sorptionsmaterials zugeführt und anschließend, nach erfolgter Beladung, bis zur Weiterverwendung im Speicherbehälter 52 zwischengespeichert werden. Dieser Transportweg des Sorptionsmaterials ist in Figur 13 durch die Pfeile 59, 60, 61 und 62 dargestellt.

Mit dem vom mobilen Tanksystem 40 zurückerhaltenem, vollständig entladenen Sorbens oder teilentladenen Sorptionsmaterial könnte im System 50 auf zwei Arten verfahren werden.

Zurückerhaltenes, vollständig entladenes Sorbens oder teilentladenes Sorptionsmaterial könnte zunächst durch eine Qualitätskontrolle in der Einrichtung 56 beurteilt werden. Dabei könnten möglicherweise beschädigte oder unbrauchbare Partikel aussortiert werden.

Das Sorbens und/oder Sorptionsmaterial könnte in der Einrichtung 57 regeneriert (hitzebehandelt/ausgeheizt) werden, um gasförmige Verunreinigungen, beispielsweise aus Nebenbestandteilen des verwendeten Gases, zu entfernen. Somit ist bei regelmäßiger Regeneration beispielsweise ohne wesentliche Nachteile die Nutzung von Wasserstoff mit geringerer Qualität/Reinheit möglich (zum Beispiel Stoffreinheit Klasse 3.0 statt Klasse 5.0).

Das Sorbens/Sorptionsmaterial kann abgekühlt (77 K) und neu mit Wasserstoff beladen und wieder an der Zapfsäule zur Verfügung gestellt werden. Dies geschieht in der Einrichtung 58. Energetisch vorteilhaft ist es, das Sorbens/Sorptionsmaterial in diskreten Prozessen oder kontinuierlich sukzessive abzukühlen und zu beladen. Eine Staffelung könnte beispielsweise wie folgt sein: 0 °C/-40 °C/-80 °C/-120 °C/-160 °C/-196°C. Sinnvoll ist gegebenenfalls auch eine Kopplung der Temperaturen an bekannte Phasenübergänge, z. B. $CO_{2fest} \rightarrow CO_{2gas}$ (Sublimation). Auch eine Variation des Beladungsdrucks kann abhängig vom Adsorptionsverhalten der Materialien bei der Energieeinsparung helfen.

Eine andere Möglichkeit besteht darin, daß zurückerhaltenes, teilweise entladenes Sorbens/Sorptionsmaterial ohne Qualitätskontrolle oder Regeneration abgekühlt und beladen werden kann, um wieder an der Zapfsäule zur Verfügung gestellt werden zu können. Gegebenenfalls kann über einen im Tanksystem 40 integrierten, auslesbaren und beschreibbaren Chip sichergestellt werden, daß in einem sinnvollen Zyklus (beispielsweise bei jedem fünftem Betankungsvorgang) eine Qualitätskontrolle unabhängig vom Beladungszustand vorgenommen wird.

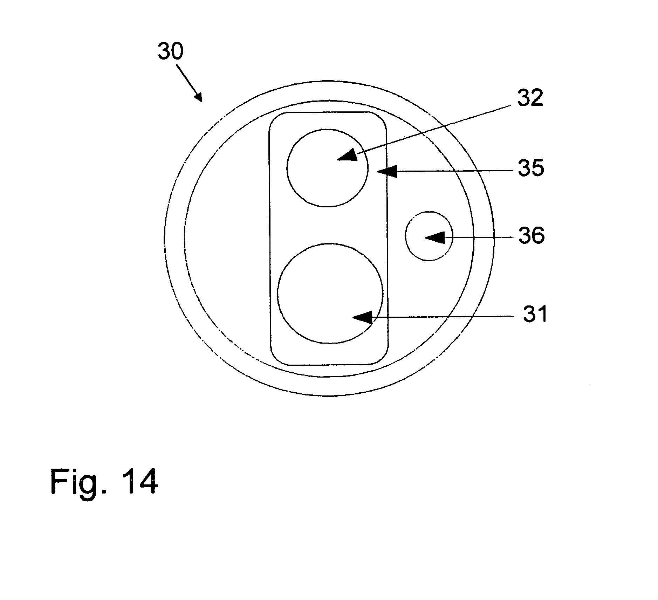

Ein Beispiel für einen geeigneten Befollungs-/Entlade-Stutzen 30, der im System 50 verwendet werden kann, um eine Verbindung zum Speicherbehälter 10 des Tanksystems 40 herzustellen, ist im Zusammenhang mit Figur 14 beschrieben. Ein für das System geeigneter Zapfhahn weist vorteilhaft folgende Eigenschaften auf:

Er verfügt über eine thermische Isolierung 35, um einen unerwünschten Wärmeeintrag in die kalten Gase und das kalte Sorptionsmaterial (vorzugsweise 77 K) zu verhindern. Weiterhin ist eine erste Durchführung, nämlich eine Transportführung 31, vorgesehen. Diese Transportführung 31 dient als Durchführung für Sorptionsmaterialpartikel, die durch einen Gasstrom transportiert werden. Die Transportführung 31 weist vorzugsweise einen runden Querschnitt auf, wobei der Durchmesser vorteilhaft einem Vielfachen der zu transportierenden Partikelgröße entspricht. Ferner ist eine zweite Durchführung für Gas, nämlich eine Gasführung 32, vorgesehen. Diese Durchführung 32 ist nur für den Gastransport vorgesehen und mittels Filtern gegen das Eindringen von Sorptionsmaterialpartikeln geschützt. Alternativ könnten auch beide Durchführungen 31, 32 für den Transport von Sorptionsmaterial geeignet sein. Somit kann beim Befüllen und Entladen des Speicherbehälters immer gekühltes Transportmedium mit einer der beiden Durchführungen 31, 32, vorzugsweise isolierten Durchführungen, transportiert werden. Damit können Verluste vermieden werden, die sich ansonsten bei der Benutzung einer warmen Durchführung für ein kaltes Medium ergeben. (Medium wärmt sich auf/Sorptionsmaterial desorbiert Gas bei Erwärmung).

Vorteilhaft kann auch eine Schnittstelle 36 für eine elektrische Datenverbindung vorgesehen sein, die einen Informationsaustausch zwischen der Tankstelle 50 und dem Tanksystem 40 des Fahrzeuges bzw. dem Fahrzeug selbst erlaubt. Übertragen werden könnten beispielsweise die Art des Sorptionsmaterials, der Beladungszustand, der Druck, die Temperatur und dergleichen.

Nachfolgend wird beispielhaft das während eines Betankungsvorgangs ablaufende Verfahren beschrieben. Dabei soll von folgender Ausgangslage ausgegangen werden:

Ein Fahrzeug erreicht die Tankstelle beispielsweise in folgendem Zustand:

Restdruck im Tanksystem kleiner 5 bar
Temperatur im Tanksystem größer 0 °C

Das bedeutet, im Tanksystem 40 des Fahrzeuges befinden sich granulatförmiges oder vorkompaktiertes, loses Sorptionsmaterial, welches teilweise mit Wasserstoff beladen ist (Die Menge an adsorbiertem Wasserstoff ist abhängig von Temperatur und Druck im Tanksystem 40 sowie von der Menge und den Adsorptionseigenschaften des verwendeten Sorptionsmaterials.), sowie nichtadsorbierter, gasförmiger Wasserstoff (Die Menge an gasförmigem Wasserstoff ist bestimmbar durch Druck, Temperatur und/oder im Tank vorliegendem freien Volumen.).

Um den Betankungsvorgang zu beginnen, wird zunächst der Befüllungsstutzen 30 am Verbindungsflansch 15 des Speicherbehälters 10 angebracht. Anschließend erfolgt eine Bestimmung der Restmenge an gespeichertem Wasserstoff durch Druck- und Temperaturmessung innerhalb des Tanksystems 40 des Fahrzeuges.

Nun erfolgt die Entladung des im Tank 10 des Fahrzeugs befindlichen Sorptionsmaterials durch Einblasen von Wasserstoff. Durch die spezielle Form und Position der Düse 18 (Figur 1) wird das pulverförmige Sorptionsmaterial 11 aufgewirbelt und durch den Gasstrom über den Auslaß (Gasführung 17) ausgetragen. Der Druck dieses Entladungskreislaufes muß nicht unbedingt 40 bar betragen, sondern kann beispielsweise dem Restdruck im Tank 10 angepaßt werden, um einer Adsorption oder weiteren Desorption des Sorptionsmaterials 11 während des Entladungsvorganges vorzubeugen.

Nach der Entfernung eines vorteilhaften Anteils des Sorptionsmaterials 11 (beispielsweise etwa 98 %) wird das Tanksystem (also der leere Speicherbehälter 10) des Fahrzeuges durch Einblasen von kaltem (77 K) Wasserstoff gekühlt. Dabei wird kaltes (77 K) Wasserstoffgas mit angepaßter Strömungsgeschwindigkeit und Volumenstrom von der Tankstelle 50 über die für den Gaseinlaß vorgesehene Durchführung 16 in den Speicherbehälter 10 geblasen, wobei durch den Wärmestrom dQ/dt vom Druckbehälter (Innenbehälter 12 des Speicherbehälters 10) zum kalten Wasserstoffgas Wärme abgeleitet wird, welche durch die Abführung des nun aufgewärmten Wasserstoffgases durch die dafür vorgesehene Durchführung 17 aus dem Speicherbehälter 10 des Fahrzeuges abtransportiert wird.

Es folgt ein Einblasen von frischem, mit Wasserstoff voll beladenem Sorptionsmaterial 11 bei beispielsweise 40 oder 100 bar Druck, und zwar über die für die Befüllung vorgesehene Durchführung (Transportführung 16). Das Sorptionsmaterial 11 wurde bereits in der Tankstelle 50 auf 77 K vorgekühlt und bei 40 bar mit Wasserstoff beladen. Daher ist ein Transport des Sorptionsmaterials 11 von der Tankstelle 50 in das Tanksystem 40 bei 40 bar nötig, um eine Desorption des Wasserstoffs zu vermeiden. Andernfalls könnten erneute Adsorptionsvorgänge im Tanksystem 40 des Fahrzeugs zu einer Erhöhung der Temperatur und folglich zu einer geringeren Standzeit bzw. kleineren Beladungsdichte und somit zu einer geringeren Reichweite des Fahrzeuges führen. Denkbar wäre auch eine Beladung an der Tankstelle 50 bei Drücken größer 40 bar, wobei der Druck beim Betanken des Tanksystems 40 auf 40 bar abgesenkt werden könnte. Folglich würde ein Teil des adsorbierten Wasserstoffes vom Sorptionsmaterial desorbieren und die Temperatur im Speicherbehälter 10 unter 77 K absinken. Bei einer geringeren Temperatur im Speicherbehälter 10 könnte bei gleichem Druck (40 bar) eine größere Menge an Wasserstoff gespeichert werden oder die Standzeit des Tanksystems 40 erhöht werden.

Nach vollständiger Befüllung des Speicherbehälters 10 mit Sorptionsmaterial 11 bei 40 bar ist der Tankvorgang beendet. Das Fahrzeug kann von der Tankstelle entkoppelt werden und seine Fahrt fortsetzen

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

**Bezugszeichenliste:**

10 Speicherbehälter
11 Sorptionsmaterial
12 Innenbehälter
13 Äußerer Isolationsbehälter
14 Isolationsbereich
15 Verbindungselement
16 Transportführung
17 Zweite Führung (Gasführung)
18 Düse
19 Rohrschleife
20 Drehbare Klappe
21 Venturiteilstück
22 Schrägstellung
23 Horizontale Ebene
24 Führung

30 Befüllungs-/Entladungs-Stutzen
31 Transportführung
32 Gasführung
33 Positionierung abhängig vom Füllstand
34 Endbereich des Befüllungs-/Entladungs-Stutzens
35 Thermische Isolation
36 Schnittstelle (Datenverbindung)

40 Tanksystem
41 Antriebsaggregat
42 Führung
43 Wärmetauschereinrichtung
45 Leitung
46 Fahrzeug

50 System zum Bereitstellen eines Sorptionsmaterials (Tankstelle)
51 Beschickungsvorrichtung
52 Speichereinrichtung
53 Datenschnittstelle
54 Entladevorgang
55 Befüllungsvorgang
56 Einrichtung zur Qualitätskontrolle
57 Einrichtung zum Regenerieren
58 Einrichtung zum Beladen eines Sorbens und/oder Sorptionsmaterials
59 Transportweg des Sorptionsmaterials
60 Transportweg des Sorptionsmaterials
61 Transportweg des Sorptionsmaterials
62 Transportweg des Sorptionsmaterials
63 Verbindung zwischen Beschickungsvorrichtung und Speichereinrichtung

**Patentansprüche**

1. Tankstelle (50) zum Bereitstellen eines ein Sorbens und ein hieran adsorbiertes Adsorbat, insbesondere einen gasförmigen Kraftstoff, vorzugsweise Wasserstoff, umfassenden Sorptionsmaterials (11) für einen Speicherbehälter (10) eines mobilen Tanksystems,
   **dadurch gekennzeichnet,**
   **dass** eine Beschickungsvorrichtung (51) vorgesehen ist, die eine Einrichtung zum Entladen von in dem Speicherbehälter (10) befindlichem verbrauchtem Sorptionsmaterial und eine Einrichtung zum Befüllen des Speicherbehälters (10) mit unverbrauchtem Sorptionsmaterial aufweist, wobei der Speicherbehälter (10) einen Druckbehälter (12), ein Verbindungselement (15) zu der Beschickungsvorrichtung (51), eine Transportführung (16) zum Beladen und/oder Entladen des Speicherbehälters und wenigstens eine zweite Führung (17) zum Zuführen und/oder Abführen eines Gases aufweist,
   **dass** eine Speichereinrichtung (52) zum Speichern von an den Speicherbehälter (10) abzugebendem Sorptionsmaterial vorgesehen ist, die zumindest zeitweilig mit der Beschickungsvorrichtung (51) verbunden ist, und
   **dass** das Sorbens auf der Grundlage von Hochleistungsadsorbentien auf der Basis von Aktivkohle in Form von diskreten Aktivkohlekörnern, vorzugsweise in Kugelform, ausgebildet ist, wobei mindestens 70 % des Gesamtporenvolumens der Hochleistungsadsorbentien durch Mikroporen mit Porendurchmessern von $\leq 20$ Å gebildet sind.

2. Tankstelle nach Anspruch 1, **dadurch gekennzeichnet, dass** die Beschickungsvorrichtung (51) zum Befüllen eines Speicherbehälters (10) mit Sorptionsmaterial (11) bei im Vergleich zum Umgebungsdruck erhöhtem Druck, vorzugsweise einem Druck von mindestens 40 bar, ausgebildet ist.

3. Tankstelle nach Anspruch 1 oder 2, **dadurch gekennzeichnet, dass** die Beschickungsvorrichtung (51) einen Befüllungs-/Entladungs-Stutzen (30) zum Befüllen und/oder Entladen des Speicherbehälters (10) aufweist, wobei der Befüllungs-/Entladungs-Stutzen (30)

   - eine erste Führung (31) zum Hindurchführen eines ein Sorbens und ein hieran adsorbiertes Adsorbat, insbesondere einen gasförmigen Kraftstoff, vorzugsweise Wasserstoff, umfassenden Sorptionsmaterials (11), wobei die erste Führung (31) mit einer Transportführung eines Speicherbehälters (10) in Verbindung bringbar ist, und
   - eine zweite Führung (32), insbesondere zum Hindurchführen eines Gases, welche mit einer Gasführung eines Speicherbehälters (10) in Verbindung bringbar ist,
   aufweist.

4. Tankstelle nach einem der vorangehenden Ansprüche, **dadurch gekennzeichnet, dass** das System (50) wenigstens eine Schnittstelle (53) zum Empfangen von Daten und/oder zum Übertragen von Daten aufweist.

5. Tankstelle nach einem der vorangehenden Ansprüche, **dadurch gekennzeichnet, dass** das System (50) eine Einrichtung (56) zur Kontrolle der Qualität von von einem Speicherbehälter (10) entladenem Sorptionsmaterial (11) aufweist.

6. Tankstelle nach einem der vorangehenden Ansprüche, **dadurch gekennzeichnet, dass** das System (50) eine Einrichtung (57) zum Regenerieren von von einem Speicherbehälter (10) entladenem Sorptionsmaterial (11) aufweist.

7. Tankstelle nach einem der vorangehenden Ansprüche, **dadurch gekennzeichnet, dass** das System (50) eine Einrichtung (58) zum Beladen eines Sorbens und/oder eines Sorptionsmaterials (11) mit einem Gas, insbesondere gasförmigem Kraftstoff, vorzugsweise Wasserstoff, aufweist, insbesondere wobei die Beladungseinrichtung (58) eine Kühleinrichtung zum Abkühlen des Sorbens und/oder des Sorptionsmaterials (11) auf eine vorgegebene Temperatur aufweist und/oder insbesondere wobei die Beladungseinrichtung (58) eine Einrichtung zum Einstellen eines vorgegebenen Beladungsdrucks aufweist.

8. Verfahren zum Befüllen eines Speicherbehälters eines mobilen Tanksystems mit einem Sorptionsmaterial,
   **dadurch gekennzeichnet,**
   **dass** in dem Speicherbehälter des mobilen Tanksystems befindliches verbrauchtes Sorptionsmaterial zunächst aus dem Speicherbehälter entladen wird und dass der Speicherbehälter anschließend mit unverbrauchtem Sorptionsmaterial befüllt wird und dass die Entladung und Befüllung des Speicherbehälters mittels einer Tankstelle (50) zum Bereitstellen eines ein Sorbens und ein hieran adsorbiertes Adsorbat umfassenden Sorptionsmaterials für den Speicherbehälter des mobilen Tanksystems erfolgt, wobei die Tankstelle (50) **dadurch gekennzeichnet ist, dass**

eine Beschickungsvorrichtung vorgesehen wird, die eine Einrichtung zum Entladen von in dem Speicherbehälter des mobilen Tanksystems befindlichem verbrauchtem Sorptionsmaterial und eine Einrichtung zum Befüllen des Speicherbehälters des mobilen Tanksystems mit unverbrauchtem Sorptionsmaterial aufweist, und dass eine Speichereinrichtung zum Speichern von an einen Speicherbehälter abzugebendem Sorptionsmaterial vorgesehen wird, die zumindest zeitweilig mit der Beschickungsvorrichtung verbunden wird, wobei das Sorbens auf der Grundlage von Hochleistungsadsorbentien auf der Basis von Aktivkohle in Form von diskreten Aktivkohlekörnern, vorzugsweise in Kugelform, ausgebildet ist, wobei mindestens 70 % des Gesamtporenvolumens der Hochleistungsadsorbentien durch Mikroporen mit Porendurchmessern von $\leq$ 20 A gebildet sind, und wobei der Speicherbehälter des mobilen Tanksystems einen Druckbehälter, ein Verbindungselement zu der Beschickungsvorrichtung, eine Transportführung zum Beladen und/oder Entladen des Speicherbehälters des mobilen Tanksystems und wenigstens eine zweite Führung zum Zuführen und/oder Abführen eines Gases aufweist.

9. Verfahren nach Anspruch 8, **dadurch gekennzeichnet,**
   **dass** der Speicherbehälter mit einem Sorptionsmaterial befüllt wird, welches mittels eines Verfahrens zum Bereitstellen eines Sorptionsmaterials für einen Speicherbehälter bereitgestellt worden ist, wobei das Verfahren **dadurch gekennzeichnet ist, dass** in einem Speicherbehälter befindliches, verbrauchtes Sorptionsmaterial aus dem Speicherbehälter entladen wird, dass das Sorptionsmaterial außerhalb des Speicherbehälters mit einem Gas, insbesondere mit Wasserstoff, erneut beladen wird und dass das beladene Sorptionsmaterial anschließend für einen Speicherbehälter erneut zur Verfügung gestellt wird, und/oder
   dass vor der Entladung des Speicherbehälters von verbrauchtem Sorptionsmaterial die Restmenge an im Speicherbehälter verbliebenem, am Sorptionsmaterial adsorbiertem Adsorbat und/oder nichtadsorbiertem, gasförmigem Kraftstoff, insbesondere Wasserstoff, ermittelt wird und/oder
   dass die Entladung des Speicherbehälters von verbrauchtem Sorptionsmaterial mittels Einblasen von im Hinblick auf das Sorptionsmaterial eingesetztem gasförmigem Kraftstoff, insbesondere von Wasserstoff, erfolgt.

10. Verfahren nach Anspruch 8 oder 9, **dadurch gekennzeichnet, dass** die Entladung des Speicherbehälters von verbrauchtem Sorptionsmaterial mittels Einblasen von im Hinblick auf das Sorptionsmaterial eingesetztem gasförmigem Kraftstoff, insbesondere von Wasserstoff, erfolgt.

11. Verfahren nach einem der Ansprüche 8 bis 10, **dadurch gekennzeichnet, dass** der Speicherbehälter zwischen der Entladung und der erneuten Befüllung auf eine vorgegebene Temperatur gebracht wird, insbesondere gekühlt wird.

12. Verfahren nach einem der Ansprüche 8 bis 11, **dadurch gekennzeichnet, dass** die erneute Befüllung des Speicherbehälters mit unverbrauchtem Sorptionsmaterial bei einem im Vergleich zum Umgebungsdruck erhöhten Druck, vorzugsweise einem Druck von mindestens 40 bar, erfolgt.

13. Verfahren nach Anspruch 12, **dadurch gekennzeichnet, dass** das unverbrauchte Sorptionsmaterial bei einem erhöhten Druck von mindestens 40 bar zum Speicherbehälter transportiert und in diesen eingefüllt wird.

**Claims**

1. A service station (50) for providing a sorbent and an adsorbate adsorbing thereto, in particular a gaseous fuel, preferably hydrogen, comprising sorption materials (11) for a storage tank (10) of a mobile tank system,
   **characterized in that**
   a feed device (51) is provided, having a unit for discharging the expended sorption material located in the storage tank (10), and a unit for filling the storage tank (10) with unspent sorption material, wherein the storage tank (10) has a pressure vessel (12), a connecting element (15) to the feed device (51), a transport guide (16) for filling and/or discharging the storage tank, and at least one second guide (17) for feeding and/or discharging a gas,
   a storage unit (52) is provided for storing sorption material to be delivered to the storage tank (10) for storing the same, which is connected at least temporarily to the feed device (51), and
   based on high performance adsorbents on the basis of activated carbon, the sorbent is embodied in the form of discrete active carbon bodies, preferably in spherical form, wherein at least 70% of the total pore volume of the high performance adsorbents is formed by micropores having pore diameters of $\leq$ 20A.

2. The service station according to claim 1, **characterized in that** for the purpose of filling a storage tank (10) with sorption material (11) the feed device (51) is embodied with an increased pressure as compared to ambient pressure, preferably a pressure of at least 40 bars.

3. The service station according to claims 1 or 2, **characterized in that** the feed device (51) comprises a filling/discharging nozzle (30) for filling and/or discharging the storage tank (10),
wherein the filling/discharging nozzle (30)

- has a first guide (31) for passing through a sorbent and an adsorbate adsorbing thereto, in particular a gaseous fuel, preferably hydrogen, comprising sorption materials (11), wherein the first guide (31) may be connected to a transport guide of a storage tank (10), and
- a second guide (32), in particular for passing through a gas which may be connected to a gas guide of a storage tank (10).

4. The service station according to one of the previous claims, **characterized in that** the system (50) comprises at least one interface (53) for receiving data, and/or for transferring data.

5. The service station according to one of the previous claims, **characterized in that** the system (50) comprises a unit (56) for controlling the quality of a sorption material (11) being discharged from a storage tank (10).

6. The service station according to one of the previous claims, **characterized in that** the system (50) comprises a unit (57) for regenerating a sorption material (11) being discharged from a storage tank (10).

7. The service station according to one of the previous claims, **characterized in that** the system (50) comprises a unit (58) for filling a sorbent and/or a sorption material (11) with a gas, in particular a gaseous fuel, preferably hydrogen, in particular, wherein the filling unit (58) comprises a cooling unit for cooling the sorbent and/or the sorption material (11) to a predetermined temperature, and/or in particular, wherein the filling unit (58) comprises a unit for adjusting a predetermined filling pressure.

8. A method for filling a storage tank of a mobile tank system, comprising a sorption material, **characterized in that**
spent sorption material located in the storage tank of the mobile tank system is initially discharged from the storage tank, and the storage tank is subsequently filled with unspent sorption material, and
the discharging and filling of the storage tank is carried out by means of a service station (50) for providing a sorbent and an adsorbate adsorbing thereto, comprising a sorption material for the storage tank of the mobile tank system, wherein the service station (50) is **characterized in that** a feed device is provided having a unit for discharging spent sorption material located in the storage tank of the mobile tank system, and a unit for filling the storage tank of the mobile tank system with unspent sorption material, and that a storage unit is provided for storing sorption material to be delivered to a storage tank, which is connected at least temporarily to the feed device, wherein the sorbent is embodied based on high performance adsorbents on the basis of active carbon in the form of discrete active carbon grains, preferably in spherical form, wherein at least 70% of the total pore volume of the high performance adsorbents are formed by micropores having pore diameters of $\leq 20$ A, and wherein the storage tank of the mobile tank system comprises a pressure vessel, a connecting element to the feed device, a transport guide for filling and/or discharging the storage tank of the mobile tank system, and at least one second guide for feeding and/or discharging a gas.

9. The method according to claim 8, **characterized in that**
the storage tank is filled with a sorption material which has been provided by means of a method for providing a sorption material for a storage tank, wherein the method is **characterized in that** spent sorption material located in a storage tank is being discharged from the storage tank, that the sorption material is refilled with a gas, in particular with hydrogen, outside of the storage tank, and that the filled sorption material is subsequently provided again for a storage tank, and/or
the residual amount of adsorbate adsorbing to the sorption material, and/or of non-adsorbing, gaseous fuel, in particular hydrogen, remaining in the storage tank is determined before discharging of spent sorption material from the storage tank, and/or discharging spent sorption material from the storage tank is carried out by means of injection of gaseous fuel, in particular hydrogen, utilized with regard to the sorption material.

10. The method according to claims 8 or 9, **characterized in that** the discharging of spent sorption material from the storage tank is carried out by means of injection of gaseous fuel, in particular hydrogen, utilized with regard to the sorption material.

**11.** The method according to claims 8 to 10, **characterized in that** the storage tank is brought to a predetermined temperature, in particular, is cooled down between discharging and refilling of the same.

**12.** The method according to claims 8 to 11, **characterized in that** the refilling of the storage tank with unspent sorption material is carried out at an increased pressure as compared to ambient pressure, preferably at a pressure of at least 40 bars.

**13.** The method according to claim 12, **characterized in that** the unspent sorption material is transported to the storage tank, and filled into the same, at an increased pressure of at least 40 bars.

**Revendications**

**1.** Poste de ravitaillement (50) pour la fourniture d'un matériau de sorption (11), comprenant un sorbant et un adsorbat adsorbé par ce dernier, en particulier un carburant gazeux, de préférence l'hydrogène, pour un récipient de stockage (10) d'un système de réservoir mobile, **caractérisé**

**en ce qu'**un équipement d'alimentation (51) est prévu, qui comprend un dispositif pour décharger un matériau de sorption consommé, se trouvant dans le récipient de stockage (10), et un dispositif pour remplir de matériau de sorption non consommé le récipient de stockage (10), le récipient de stockage (10) comprenant un récipient sous pression (12), un élément de liaison (15) à l'équipement d'alimentation (51), un passage de transport (16) pour charger et/ou décharger le récipient de stockage, et au moins un deuxième passage (17) pour amener et/ou évacuer un gaz,

**en ce qu'**un dispositif de stockage (52) est prévu, destiné à stocker un matériau de sorption devant être cédé au récipient de stockage (10), qui au moins de temps à autre est relié à l'équipement d'alimentation (51), et

**en ce que** le sorbant est configuré sur la base d'adsorbants hautes performances à base de charbon actif sous forme de grains discrets de charbon actif, de préférence de forme sphérique, au moins 70 % du volume total des pores des adsorbants haute performance étant constitués de micropores ayant un diamètre de pore $\leq 20$ Å.

**2.** Poste de ravitaillement selon la revendication 1, **caractérisé en ce que** l'équipement d'alimentation (51) est configuré pour remplir un récipient de stockage (10) d'un matériau de sorption (11), sous une pression élevée par comparaison avec la pression ambiante, de préférence sous une pression d'au moins 40 bar.

**3.** Poste de ravitaillement selon la revendication 1 ou 2, **caractérisé en ce que** l'équipement d'alimentation (51) comprend une tubulure de remplissage/décharge (30), pour remplir et/ou décharger le récipient de stockage (10), la tubulure de remplissage/décharge (30) comprenant

- un premier passage (31) pour faire passer un matériau de sorption (11), comprenant un sorbant et un adsorbat adsorbé par ce dernier, en particulier un carburant gazeux, de préférence l'hydrogène, le premier passage (31) pouvant être relié à un passage de transport d'un récipient de stockage (10), et
- un deuxième passage (32), en particulier pour faire passer un gaz, qui peut être mis en liaison avec un passage de gaz d'un récipient de stockage (10).

**4.** Poste de ravitaillement selon l'une des revendications précédentes, **caractérisé en ce que** le système (50) comprend au moins une interface (53) pour recevoir des données et/ou pour transmettre des données.

**5.** Poste de ravitaillement selon l'une des revendications précédentes, **caractérisé en ce que** le système (50) comprend un dispositif (56) pour le contrôle de qualité d'un matériau de sorption (11) déchargé d'un récipient de stockage (10).

**6.** Poste de ravitaillement selon l'une des revendications précédentes, **caractérisé en ce que** le système (50) comprend un dispositif (57) pour régénérer le matériau de sorption (11) déchargé d'un récipient de stockage (10).

**7.** Poste de ravitaillement selon l'une des revendications précédentes, **caractérisé en ce que** le système (50) comprend un dispositif (58) pour charger d'un gaz, en particulier d'un carburant gazeux, de préférence l'hydrogène, un sorbant et/ou un matériau de sorption (11), en particulier le dispositif de chargement (58) comprenant un dispositif de refroidissement pour refroidir le sorbant et/ou le matériau de sorption (11) à une température prédéfinie, et/ou en particulier le dispositif de chargement (58) comprenant un dispositif pour ajuster à une valeur prédéfinie la pression de chargement.

**8.** Procédé pour remplir d'un matériau de sorption un récipient de stockage d'un système de réservoir mobile, **caractérisé en ce que** le matériau de sorption consommé, se trouvant dans le récipient de stockage du système de réservoir mobile, est d'abord déchargé du récipient de stockage, et en ce que le récipient de stockage est ensuite rempli de matériau de sorption non consommé, et

**en ce que** la décharge et le remplissage du récipient de stockage sont réalisés avec un poste de ravitaillement (50) pour la fourniture d'un matériau de sorption, comprenant un sorbant et un adsorbat adsorbé par ce dernier, pour le récipient de stockage du système de réservoir mobile, le poste de ravitaillement (50) étant **caractérisé en ce qu'**un équipement d'alimentation est prévu, qui comprend un dispositif pour décharger le matériau de sorption consommé se trouvant dans le récipient de stockage du système de réservoir mobile et un dispositif pour remplir de matériau de sorption non consommé le récipient de stockage du système de réservoir mobile, et **en ce qu'**un dispositif de stockage, destiné à stocker du matériau de sorption devant être cédé à un récipient de stockage, est prévu, qui au moins de temps à autre est relié à l'équipement d'alimentation, le sorbant étant configuré sur la base d'adsorbants hautes performances à base de charbon actif sous forme de grains discrets de charbon actif, de préférence de forme sphérique, au moins 70 % du volume total des pores des adsorbants hautes performances étant formés de micropores ayant un diamètre de pore $\leq 20$ Å, et le récipient de stockage du système de réservoir mobile comprenant un récipient sous pression, un élément de liaison avec l'équipement d'alimentation, un passage de transport pour charger et/ou décharger le récipient de stockage du système de réservoir mobile, et au moins un deuxième passage pour amener et/ou évacuer un gaz.

**9.** Procédé selon la revendication 8, **caractérisé en ce que** le récipient de stockage est rempli d'un matériau de sorption, qui a été fourni à l'aide d'un procédé pour fournir un matériau de sorption à un récipient de stockage, le procédé étant **caractérisé en ce que** du matériau de sorption consommé, se trouvant dans un récipient de stockage, est déchargé du récipient de stockage, **en ce que** le matériau de sorption est de nouveau chargé d'un gaz, en particulier d'hydrogène, à l'extérieur du récipient de stockage, et **en ce que** le matériau de sorption chargé est ensuite de nouveau mis à la disposition du récipient de stockage, et/ou

**en ce que**, avant que le matériau de sorption consommé ne soit déchargé du récipient de stockage, on détermine la quantité résiduelle d'adsorbant adsorbé par le matériau de sorption et restant dans le récipient de stockage et/ou de carburant gazeux, en particulier d'hydrogène, non adsorbé, et/ou

**en ce que** la décharge du matériau de sorption, à partir du récipient de stockage, a lieu par insufflation d'un carburant gazeux, en particulier l'hydrogène, utilisé en liaison avec le matériau de sorption.

**10.** Procédé selon la revendication 8 ou 9, **caractérisé en ce que** la décharge du matériau de sorption consommé à partir du récipient de stockage a lieu par insufflation d'un carburant gazeux, en particulier l'hydrogène, utilisé par rapport au matériau de sorption.

**11.** Procédé selon l'une des revendications 8 à 10, **caractérisé en ce que** le récipient de stockage est, entre la décharge et le nouveau remplissage, porté à une température prédéfinie, en particulier refroidi.

**12.** Procédé selon l'une des revendications 8 à 11, **caractérisé en ce que** le nouveau remplissage du récipient de stockage avec le matériau de sorption non consommé a lieu sous une pression élevée par comparaison avec la pression ambiante, de préférence sous une pression d'au moins 40 bar.

**13.** Procédé selon la revendication 12, **caractérisé en ce que** le matériau de sorption non consommé est transporté dans le récipient de stockage sous une pression élevée, d'au moins 40 bar, et est introduit dans ce dernier.

Fig. 1

Adsorbens Entladung
(Tanken)

Adsorbens
Auslass

$H_2$ Gas
Einlass

10

15

16

17,18

13

14

12

11

Fig. 2

Befüllung mit Adsorbens
(Tanken)

Adsorbens
Einlass

$H_2$ Gas
Auslass

10

15

16

17,18

13

14

12

11

Fig. 3

Fahrt

10

H₂ Gas
(warm)

H₂ Gas
(kalt)

15

16

17,18

13

14

12

11

Fig. 4

EP 2 160 232 B1

Fig. 5

Adsorbens Entladung
(Tanken)

Fig. 6

Befüllung mit Adsorbens
(Tanken)

Fig. 7

Fahrt

Fig. 8

Fig. 9

Adsorbens Entladung
(Tanken)

Fig. 10

Befüllung mit Adsorbens
(Tanken)

Fig. 11

Fahrt

Fig. 12

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005044454 A2
- DE 102005023036 A1
- DE 2615630 A1
- US 5858067 A
- US 20050287407 A1
- US 4018190 A
- WO 0184041 A1
- DE 102000048790
- DE 202006016898
- DE 102006048790
- DE 202004017036 U1


**In der Beschreibung aufgeführte Nicht-Patentliteratur**

- **L. GURVICH.** *J. Phys. Chem. Soc. Russ.,* 1915, vol. 47, 805
- **S. LOWELL et al.** Characterization of Porous Solids and Powders: Surface Area Pore Size and Density. Kluwer Academic Publishers, 111 ff
- BET-Methode. **STICHWORT.** Römpp Chemielexikon. Georg Thieme Verlag
- **WINNACKER ; KÜCHLER.** ROMPP CHEMIELEXIKON. vol. 7, 93 ff
- *Z. Anal. Chem.,* 1968, vol. 238, 187-193
- **R. W. MAGEE.** Evaluation of the External Surface Area of Carbon Black by Nitrogen Adsorption. *Presented at the Meeting of the Rubber Division of the American Chem. Soc.,* Oktober 1994
- AUTOSORB-1, AS1 WinVersion 1.50, Operating Manual. Quantachrome Instruments, 2004, 71 ff